(19) **Europäisches Patentamt / European Patent Office / Office européen des brevets**

(11) **EP 3 975 634 A1**

(12) # EUROPEAN PATENT APPLICATION
published in accordance with Art. 153(4) EPC

(43) Date of publication:
**30.03.2022 Bulletin 2022/13**

(21) Application number: **20822202.6**

(22) Date of filing: **21.05.2020**

(51) International Patent Classification (IPC):
***H04W 68/00*** (2009.01)

(52) Cooperative Patent Classification (CPC):
**H04W 68/00**

(86) International application number:
**PCT/CN2020/091583**

(87) International publication number:
**WO 2020/248791 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019 CN 201910517025**

(71) Applicant: **Huawei Technologies Co., Ltd.**
**Longgang District**
**Shenzhen,**
**Guangdong 518129 (CN)**

(72) Inventors:
- **LI, Bingzhao**
  **Shenzhen, Guangdong 518129 (CN)**
- **WANG, Hong**
  **Shenzhen, Guangdong 518129 (CN)**
- **CHEN, Lei**
  **Shenzhen, Guangdong 518129 (CN)**
- **XU, Bin**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) ## PAGING METHOD, DEVICE AND STORAGE MEDIUM

(57) Embodiments of this application provide a paging method, a device, and a storage medium. The method includes: A core network device sends a first message to a first network device and a second network device, where the first message is used to indicate the first network device and the second network device to page a terminal device, the first message includes first indication information, and the first indication information is used to indicate a manner of calculating paging moments at which the first network device and the second network device page the terminal device. The core network device receives a second message from the first network device, where the second message is used to indicate that the terminal device accesses the first network device. The core network device sends a third message to the second network device, where the third message is used to indicate the second network device to cancel paging the terminal device. In the embodiments of this application, paging moments for paging the terminal device in various cells are dispersed. In this way, after the terminal device accesses a cell, the terminal device is no longer paged in another cell in which paging of the terminal device is not started. Therefore, paging overheads of paging the terminal device can be reduced in a paging area.

FIG. 5

**Description**

This application claims priority to Chinese Patent Application No. 201910517025.1, filed with the China National Intellectual Property Administration on June 14, 2019 and entitled "PAGING METHOD, DEVICE, AND STORAGE MEDIUM", which is incorporated herein by reference in its entirety.

**TECHNICAL FIELD**

Embodiments of this application relate to the communication technologies, and in particular, to a paging method, a device, and a storage medium.

**BACKGROUND**

Paging (paging) is used to notify a terminal device in an idle (idle) state or a terminal device in an inactive (inactive) state to establish a service; or is used to notify a terminal device that cell system information changes, so that the terminal device rereads a changed system broadcast message; or is used to notify a terminal device to receive earthquake and tsunami warning system (earthquake and tsunami warning system, ETWS) information. Currently, paging may be classified into cell paging and paging area paging based on a paging sending range.

The paging area paging refers to paging a terminal device in an entire paging area, and is used to notify a terminal device in the idle state or a terminal device in the inactive state to establish a service. In other words, when the paging area paging is triggered, paging of a same terminal device occurs in a plurality of cells. One paging area may include hundreds of cells. Therefore, when the terminal device is paged in the paging area, the terminal device is paged in sequence or round by round in the hundreds of cells. Consequently, overheads of paging the terminal device are high in the paging area.

Therefore, how to reduce paging overheads of paging the terminal device in the paging area is an urgent problem to be resolved.

**SUMMARY**

Embodiments of this application provide a paging method, a device, and a storage medium, to resolve a technical problem of how to reduce paging overheads of paging a terminal device in a paging area.

According to a first aspect, an embodiment of this application provides a paging method. The method is applicable to paging a terminal device in an idle (idle) state. In the method, a core network device may send a first message to a first network device and a second network device, to indicate the first network device and the second network device to page the terminal device. The first message includes first indication information, and the first indication information is used to indicate a manner of calculating paging moments at which the first network device and the second network device page the terminal device. In other words, the first indication information is used to indicate that the terminal supports or enables an enhanced paging moment calculation manner, so that the first network device and the second network device determine, according to the indication, the manner of calculating the paging moments for paging the terminal device. For example, if the terminal supports the enhanced paging moment calculation manner, and a network device also enables an enhanced paging moment calculation function, the network device may determine to use the enhanced paging moment calculation manner when calculating a paging moment for the terminal. The enhanced paging moment calculation manner is used, so that paging moments for paging the terminal device that are determined for various cells in a paging area may be dispersed in different paging frames of a paging cycle, and are not be concentrated in a same paging frame. In other words, the terminal device may be paged at different moments in different cells in the paging area.

In this way, when the core network device receives a second message from the first network device, the core network device sends a third message to the second network device, so that the second network device cancels paging the terminal device. The second message is used to indicate that the terminal device accesses the first network device, and the third message is used to indicate the second network device to cancel paging the terminal device. The paging moments for paging the terminal device in various cells are dispersed. In this way, after the terminal device accesses a cell, the terminal device may be no longer paged in another cell in which paging of the terminal device is not started. Therefore, paging overheads of paging the terminal device can be reduced in the paging area.

In a possible implementation, the paging moment determined by the second network device for paging the terminal device is later than the paging moment determined by the first network device for paging the terminal device. For example, after receiving the second message sent by the first network device, the core network device may determine whether the paging moment determined by the second network device for paging the terminal device is later than the paging moment determined by the first network device for paging the terminal device. If the paging moment determined by the second network device for paging the terminal device is later than the paging moment determined by the first network device for paging the terminal device, the core network device sends the third message to the second network device, to indicate the second network device to cancel paging the terminal device. In the foregoing manner, the terminal device is no longer paged in a cell in which the terminal device is not paged in the paging area, so that overheads of sending the third message can be reduced, and paging overheads of paging the terminal device can be reduced in the paging area.

In a possible implementation, the first indication information is capability information of the terminal device, and the capability information is used to indicate that the terminal device supports an enhanced paging moment calculation manner. In this implementation, the method further includes: The core network device obtains the capability information. In this manner, the capability information of the terminal device may be directly reused as the first indication information, so that paging moments for paging the terminal device that are determined for cells that support the enhanced paging moment calculation manner in the paging area are dispersed in different paging frames of the paging cycle.

In a possible implementation, the second message includes an identifier of the terminal device. For example, the second message may be a newly added message that is specifically used to indicate that the terminal device accesses the first network device, or may be an initial user equipment (user equipment, UE) message sent by the first network device to the core network device, or the like.

According to a second aspect, an embodiment of this application provides a paging method. The method is applicable to paging a terminal device in an idle (idle) state. In the method, a core network device may obtain time information of a paging moment at which a first network device pages the terminal device. The time information of the paging moment may include, for example, an offset of a paging frame and/or an offset of a paging occasion.

Further, the core network device may send a first message to the first network device based on the time information of the paging moment at which the first network device pages the terminal device, where the first message is used to page the terminal device. For example, the core network device sends the first message to the first network device before the paging moment at which the first network device pages the terminal device. Alternatively, the core network device determines a paging moment time sequence based on the time information of the paging moment at which the first network device pages the terminal device and time information of a paging moment at which a second network device pages the terminal device. The paging moment time sequence indicates that the paging moment of the first network device is earlier than the paging moment of the second network device. The core network device sends the first message to the first network device according to the paging moment time sequence.

A manner in which the core network device obtains the time information of the paging moment at which the first network device pages the terminal device is not limited in this embodiment. For example, the core network device receives the time information that is of the paging moment at which the first network device pages the terminal device and that is reported by the first network device.

In the foregoing method, the core network device may learn of, based on the time information of the paging moment for paging the terminal device, paging moments for paging the terminal device in various cells, and/or a paging moment time sequence for paging the terminal device in various cells. Further, the core network device may sequentially send, to a network device to which a cell in a paging area belongs, the first message used to page the terminal device, to page the terminal device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the method further includes: The core network device obtains the capability information. In this manner, the first indication information may be used to indicate, to determine, in the enhanced paging moment calculation manner, the paging moment for paging the terminal device, a network device that enables an enhanced paging moment calculation function. Therefore, paging moments for paging the terminal device that are determined for various cells in the paging area are dispersed in different paging frames of a paging cycle, and are not concentrated in a same paging frame. In other words, the terminal device may be paged at different moments in different cells in the paging area.

In this scenario, the method further includes: The core network device obtains the time information of the paging moment at which the second network device pages the terminal device, where the paging moment of the second network device is later than the paging moment of the first network device. When the core network device does not send the first message to the second network device based on the time information of the paging moment at which the second network device pages the terminal device, the core network device cancels sending the first message to the second network device if the core network device receives a second message from the first network device, where the second message is used to indicate that the terminal device accesses the first network device. Alternatively, before the core network device does not send the first message to the second network device based on the time information of the paging moment at which the second network device pages the terminal device, the core network device sends the first message to the second network device based on the time information of the paging moment at which the second network device pages the terminal device if the core network device does not receive a second message from the first network device.

In a possible implementation, the second message includes an identifier of the terminal device. For example, the second message may be a newly added message that is specifically used to indicate that the terminal device accesses the first network device, or may be an initial user equipment (user equipment, UE) message sent by the first network device to the core network device, or the like.

The paging moments for paging the terminal device in various cells are dispersed. In this way, after the terminal device accesses a cell, the core network device may stop sending a paging message to another cell in which paging of the terminal device is not started. Therefore, the terminal device is not paged in these cells, and paging overheads of paging the terminal device can be reduced in the paging area. In other words, according to the method in this embodiment, paging overheads of paging the terminal device are reduced on an air interface side, and overheads of sending, by the core network device to the network device in the paging area, the first message used to page the terminal device are reduced.

According to a third aspect, an embodiment of this application provides a paging method. The method is applicable to paging a terminal device in an inactive (inactive) state. In the method, a third network device sends a first message to a first network device and a second network device, where the first message is used to indicate the first network device and the second network device to page the terminal device, the first message includes first indication information, the first indication information is used to indicate a manner of calculating paging moments at which the first network device and the second network device page the terminal device, and the third network device is a network device that stores a terminal connection context. For descriptions of the first indication information, refer to the descriptions of the first indication information in the first aspect.

In this way, after obtaining a second message, the third network device may send a third message to the second network device. The second message is used to indicate that the terminal device accesses the first network device or accesses the third network device, and the third message is used to indicate the second network device to cancel paging the terminal device.

For example, the second message is used to indicate that the terminal device accesses the first network device. In this scenario, that the third network device obtains a second message includes: The third network device receives the second message from the first network device. For example, the second message is a user equipment context obtaining message.

In this implementation, in a possible implementation, the third network device determines, based on a manner of calculating a paging moment at which the third network device pages the terminal device, the paging moment at which the third network device pages the terminal device. If the paging moment at which the third network device pages the terminal device is later than a moment at which the third network device receives the second message, the third network device stops paging the terminal device.

In this implementation, in a possible implementation, the paging moment determined by the second network device for paging the terminal device is later than the paging moment determined by the first network device for paging the terminal device. In the foregoing manner, the terminal device is no longer paged in a cell in which the terminal device is not paged in a paging area, so that overheads of sending the third message can be reduced, and paging overheads of paging the terminal device can be reduced in the paging area.

For another example, the second message is used to indicate that the terminal device accesses the third network device. In this scenario, that the third network device obtains a second message includes: The third network device receives the second message from the terminal device. For example, the second message is a radio resource control connection resume request message.

In this implementation, in a possible implementation, the method further includes: The third network device sends the third message to the first network device.

In this implementation, in a possible implementation, the paging moment determined by the first network device for paging the terminal device and/or the paging moment determined by the second network device for paging the terminal device are/is later than a paging moment determined by the third network device for paging the terminal device.

In the foregoing method, paging moments for paging the terminal device in various cells are dispersed. In this way, after the terminal device accesses a cell, the terminal device may be no longer paged in another cell in which paging of the terminal device is not started. Therefore, paging overheads of paging the terminal device can be reduced in the paging area.

In a possible implementation, the first indication information is capability information of the terminal device, and the capability information is used to indicate that the terminal device supports an enhanced paging moment calculation manner. In this implementation, the method further includes: The third network device obtains the capability information. In this manner, the capability information of the terminal device may be directly reused as the first indication information, so that paging moments for paging the terminal device that are determined for cells that support the enhanced paging moment calculation manner in the paging area are dispersed in different paging frames of a paging cycle.

According to a fourth aspect, an embodiment of this application provides a paging method. The method is applicable to paging a terminal device in an inactive (inactive) state. In the method, a third network device that stores a terminal connection context may obtain time information of a paging moment at which a first network device pages the terminal device. The time information of the paging moment may include, for example, an offset of a paging frame and/or an offset of a paging occasion.

Further, the third network device sends a first message to the first network device based on the time information of the paging moment at which the first network device pages the terminal device, where the first message is used to page the terminal device. For example, the third network device sends the first message to the first network device before the paging moment at which the first network device pages the terminal device. Alternatively, the third network device determines a paging moment time sequence based on the time information of the paging moment at which the first network device pages the terminal device and time information of a paging moment at which a second network device pages the terminal device. The paging moment time sequence indicates that the paging moment of the first network device is earlier than the paging moment of the second network device. The third network device sends the first message to the first network device according to the paging moment time sequence.

A manner in which the third network device obtains the time information of the paging moment at which the first network device pages the terminal device is not limited in this embodiment. For example, the third network device receives, from a core network device, the time information of the paging moment at which the first network device pages the terminal device.

In the foregoing method, the third network device may learn of, based on the time information of the paging moment for paging the terminal device, paging moments for paging the terminal device in various cells, and/or a paging moment time sequence for paging the terminal device in various cells. Further, the third network device may sequentially send, to a network device to which a cell in a paging area belongs, the first message used to page the terminal device, to page the terminal device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the method further includes: The third network device obtains the capability information. In this manner, the first indication information may be used to indicate, to determine, in the enhanced paging moment calculation manner, the paging moment for paging the terminal device, a network device that enables an enhanced paging moment calculation function. Therefore, paging moments for paging the terminal device that are determined for various cells in the paging area are dispersed in different paging frames of a paging cycle, and are not concentrated in a same paging frame. In other words, the terminal device may be paged at different moments in different cells in the paging area.

In this scenario, the method may further include: The third network device obtains the time information of the paging moment at which the second network device pages the terminal device, where the paging moment at which the second network device pages the terminal device is later than the paging moment at which the first network device pages the terminal device. When the third network device does not send the first message to the second network device based on the time information of the paging moment at which the second network device pages the terminal device, the third network device cancels sending the first message to the second network device if the third network device receives a second message from the first network device that pages the terminal device. The second message is used to indicate that the terminal device accesses the first network device. Alternatively, before the third network device does not send the first message to the second network device based on the time information of the paging moment at which the second network device pages the terminal device, the third network device sends the first message to the second network device based on the time information of the paging moment at which the second network device pages the terminal device if the third network device does not receive a second message from the first network device.

In a possible implementation, the method further includes: The third network device obtains time information of a paging moment at which the third network device pages the terminal device. When the third network device does not page the terminal device based on the time information of the paging moment at which the third network device pages the terminal device, the third network device cancels paging the terminal device if the third network device receives a second message from the first network device. Alternatively, before the third network device does not page the terminal device based on the time information of the paging moment at which the third network device pages the terminal device, the third network device pages the terminal device based on the time information of the paging moment at which the third network device pages the terminal device if the third network device does not receive a second message from the first network device.

In the foregoing embodiment, the second message may be, for example, a user equipment context obtaining message.

The paging moments for paging the terminal device in various cells are dispersed. In this way, after the terminal device accesses a cell, the third network device may stop sending a paging message to another cell in which paging of the terminal device is not started. Therefore, the terminal device is not paged in these cells, and paging overheads of paging the terminal device can be reduced in the paging area. In other words, according to the method in this embodiment, paging overheads of paging the terminal device by the network device in the paging area are reduced, and overheads of sending, by the third network device to the network device in the paging area, the first message used to page the terminal device are reduced.

According to a fifth aspect, an embodiment of this application provides a paging method. In the method, a network device may obtain first indication information, where the first indication information is used to indicate a manner of calculating a paging moment at which the network device pages a terminal device. Then, the network device may determine, based on the first indication information, the paging moment for paging the terminal device.

In other words, the first indication information is used to indicate that the terminal supports or enables an enhanced paging moment calculation manner, so that the network device determines, according to the indication, the manner of calculating the paging moment for paging the terminal device. For example, if the terminal supports the enhanced paging moment calculation manner, and the network device also enables an enhanced paging moment calculation function, the network device may determine to use the enhanced paging moment calculation manner when calculating the paging moment for the terminal. The enhanced paging moment calculation manner is used, so that paging moments for paging the terminal device that are determined for various cells in a paging area may be dispersed in different paging frames of a paging cycle, and are not be concentrated in a same paging frame. In other words, the terminal device may be paged at different moments in different cells in the paging area.

In a possible implementation, the first indication information is capability information of the terminal device, and the capability information is used to indicate that the terminal device supports an enhanced paging moment calculation manner. In this implementation, that the network device obtains the capability information includes: The network device receives a paging message from the core network device or the third network device, where the paging message is used to page the terminal device, the paging message carries the capability information, and the third network device is a network device that stores a terminal connection context. Alternatively, the network device receives the capability information from the core network device. In this manner, the capability information of the terminal device may be directly reused as the first indication information, so that paging moments for paging the terminal device that are determined for cells that support the enhanced paging moment calculation manner in the paging area are dispersed in different paging frames of the paging cycle.

In a possible implementation, that the network device determines, based on the first indication information, the paging moment for paging the terminal device includes: The network device obtains the time information of the paging moment based on the first indication information. The network device calculates the paging moment based on the time information of the paging moment. For example, the time information of the paging moment includes an offset of a paging frame and/or an offset of a paging occasion; a first offset of a paging frame and a second offset of the paging frame; or a first offset of a paging frame, a second offset of the paging frame, and an offset of a paging occasion.

A manner of obtaining the time information of the paging moment is not limited in this embodiment. For example, the network device determines the time information of the paging moment based on an identifier of a cell in which the terminal device is paged.

In a possible implementation, the method further includes: The network device sends the time information of the paging moment to the terminal device. Alternatively, the network device sends second indication information to the terminal device, where the second indication information is used to enable an enhanced paging moment paging function. In this manner, the terminal device may learn whether the network device pages the terminal device by using the paging moment determined in the enhanced paging moment calculation manner, so that the terminal device can monitor the paging at the correct monitoring moment.

After the network device determines the paging moment for paging the terminal device, the network device pages the terminal device at the paging moment for paging the terminal device. In this implementation, if the terminal device is a terminal device in an idle state, the method further includes: The network device receives an access message from the terminal device. Then, the network device sends a second message to the core network device, where the second message is used to indicate that the terminal device accesses the network device. For example, the access message may be a radio resource control establishment request message or a radio resource control establishment complete message. The second message may be an initial user equipment message. If the terminal device is a terminal device in an inactive state, the method further includes: The network device receives an access message from the terminal device. Then, the network device sends a second message to the third network device, where the second message is used to indicate that the terminal device accesses the network device, and the third network device is the network device that stores the terminal connection context. For example, the access message is a radio resource control connection resume request message. The second message is a user equipment context obtaining message.

After the network device determines the paging moment for paging the terminal device, if the network device receives a third message from the core network device or the third network device, where the third message is used to indicate the network device to cancel paging the terminal device, In this scenario, if a paging message of the network device for the terminal device is not sent to the terminal device, the network device cancels paging the terminal device.

The paging moments for paging the terminal device in various cells are dispersed. In this way, after the terminal device accesses a cell, the terminal device may be no longer paged in another cell in which paging of the terminal device is not started. Therefore, paging overheads of paging the terminal device can be reduced in the paging area.

According to a sixth aspect, an embodiment of this application provides a paging method. In the method, a terminal device may first determine that a network device corresponding to a cell on which the terminal device camps supports an enhanced paging moment paging function. Then, the terminal device determines a monitoring moment of a paging message based on time information of a paging moment. Further, the terminal device monitors the paging message at the monitoring moment. In this manner, an enhanced paging moment calculation manner may be used to page the terminal device between the network device and the terminal device.

In a possible implementation, that a terminal device determines that a network device corresponding to a cell on which the terminal device camps supports an enhanced paging moment paging function includes: The terminal device obtains the time information of the paging moment. Then, the terminal device determines, based on the time information of the paging moment, that the network device supports the enhanced paging moment paging function. Alternatively, the terminal device receives second indication information from the network device, where the second indication information is used to enable the enhanced paging moment paging function. Then, the terminal device determines, based on the second indication information, that the network device supports the enhanced paging moment paging function.

In the foregoing embodiment, the time information of the paging moment may include an offset of a paging occasion and/or an offset of a paging frame; a first offset of a paging frame and a second offset of the paging frame; or a first offset of a paging frame, a second offset of the paging frame, and an offset of a paging occasion.

A manner of obtaining the time information of the paging moment is not limited in this embodiment. For example, the terminal device determines the time information of the paging moment based on an identifier of the cell. Alternatively, the terminal device receives the time information of the paging moment from the network device.

In a possible implementation, the method further includes: The terminal device sends capability information to a core network device, the network device, or a third network device, where the capability information is used to indicate that the terminal device supports an enhanced paging moment calculation manner, and the third network device is a network device that stores a terminal connection context. In this manner, the core network device, the network device, or the third network device may learn that the terminal device supports the enhanced paging moment calculation manner. Therefore, when the terminal device is paged, the enhanced paging moment calculation manner may be used to determine the paging moment for paging the terminal device. Further, paging moments for paging the terminal device that are determined for various cells in a paging area may be dispersed in different paging frames of a paging cycle, and are not be concentrated in a same paging frame. In other words, the terminal device may be paged at different moments in different cells in the paging area.

According to a seventh aspect, an embodiment of this application provides a core network device. The core network device includes a sending module and a receiving module. In a possible implementation, the core network device may further include a processing module.

The sending module is configured to send a first message to a first network device and a second network device, where the first message is used to indicate the first network device and the second network device to page a terminal device, the first message includes first indication information, and the first indication information is used to indicate a manner of calculating paging moments at which the first network device and the second network device page the terminal device.

The receiving module is configured to receive a second message from the first network device, where the second message is used to indicate that the terminal device accesses the first network device.

The sending module is further configured to send a third message to the second network device, where the third message is used to indicate the second network device to cancel paging the terminal device.

In a possible implementation, the paging moment determined by the second network device for paging the terminal device is later than the paging moment determined by the first network device for paging the terminal device.

In a possible implementation, the first indication information is capability information of the terminal device, and the capability information is used to indicate that the terminal device supports an enhanced paging moment calculation manner. In this implementation, the processing module is configured to obtain the capability information.

In a possible implementation, the second message includes an identifier of the terminal device.

For beneficial effects of the core network device provided in the seventh aspect and the possible implementations of the seventh aspect, refer to the beneficial effects brought by the first aspect and the possible implementations of the first aspect. Details are not described herein again.

According to an eighth aspect, an embodiment of this application provides a core network device. The core network device includes a processing module. In a possible implementation, the core network device may further include a sending module and/or a receiving module.

The processing module is configured to: obtain time information of a paging moment at which a first network device pages a terminal device, and control, based on the time information of the paging moment at which the first network device pages the terminal device, the sending module to send a first message to the first network device, where the first message is used to page the terminal device. The time information of the paging moment may include, for example, an offset of a paging frame and/or an offset of a paging occasion.

For example, the processing module is specifically configured to control, before the paging moment at which the first network device pages the terminal device, the sending module to send the first message to the first network device. Alternatively, the processing module is specifically configured to: determine a paging moment time sequence based on the time information of the paging moment at which the first network device pages the terminal device and time information of a paging moment at which a second network device pages the terminal device, and control, according to the paging moment time sequence, the sending module to send the first message to the first network device. The paging moment time sequence indicates that the paging moment of the first network device is earlier than the paging moment of the second network device.

A manner in which the processing module obtains the time information of the paging moment at which the first network device pages the terminal device is not limited in this embodiment. For example, the processing module is specifically configured to receive, through the receiving module, the time information that is of the paging moment at which the first network device pages the terminal device and that is reported by the first network device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the processing module is further configured to obtain the capability information.

In this scenario, the processing module is further configured to: obtain the time information of the paging moment at which the second network device pages the terminal device, where the paging moment of the second network device is later than the paging moment of the first network device; and when the sending module is not controlled, based on the time information of the paging moment at which the second network device pages the terminal device, to send the first message to the second network device, cancel sending the first message to the second network device if the receiving module receives a second message from the first network device, where the second message is used to indicate that the terminal device accesses the first network device; or before the sending module is not controlled, based on the time information of the paging moment at which the second network device pages the terminal device, to send the first message to the second network device, control, based on the time information of the paging moment at which the second network device pages the terminal device, the sending module to send the first message to the second network device if the receiving module does not receive a second message from the first network device.

In a possible implementation, the second message includes an identifier of the terminal device. For example, the second message may be a newly added message that is specifically used to indicate that the terminal device accesses the first network device, or may be an initial user equipment (user equipment, UE) message sent by the first network device to the core network device, or the like.

For beneficial effects of the core network device provided in the eighth aspect and the possible implementations of the eighth aspect, refer to the beneficial effects brought by the second aspect and the possible implementations of the second aspect. Details are not described herein again.

According to a ninth aspect, an embodiment of this application provides a network device. The network device is a third network device. The third network device includes a sending module and a processing module. In a possible implementation, the third network device may further include a receiving module.

The sending module is configured to send a first message to a first network device and a second network device, where the first message is used to indicate the first network device and the second network device to page a terminal device, the first message includes first indication information, the first indication information is used to indicate a manner of calculating paging moments at which the first network device and the second network device page the terminal device, and the third network device is a network device that stores a terminal connection context.

The processing module is configured to obtain a second message, where the second message is used to indicate that the terminal device accesses the first network device or accesses the third network device.

The sending module is further configured to send a third message to the second network device, where the third message is used to indicate the second network device to cancel paging the terminal device.

For example, if the second message is used to indicate that the terminal device accesses the first network device, in this scenario, the processing module is specifically configured to receive the second message from the first network device through the receiving module. For example, the second message is a user equipment context obtaining message.

In this implementation, in a possible implementation, the processing module is further configured to: determine, based on a manner of calculating a paging moment at which the third network device pages the terminal device, the paging moment at which the third network device pages the terminal device; and stop paging the terminal device when the paging moment at which the third network device pages the terminal device is later than a moment at which the receiving module receives the second message. For example, the second message is a radio resource control connection resume request message.

In this implementation, in a possible implementation, the paging moment determined by the second network device for paging the terminal device is later than the paging moment determined by the first network device for paging the terminal device.

For another example, the second message is used to indicate that the terminal device accesses the third network device. In this scenario, the processing module is specifically configured to receive the second message from the terminal device through the receiving module.

In this implementation, in a possible implementation, the sending module is further configured to send the third message to the first network device.

In this implementation, in a possible implementation, the paging moment determined by the first network device for paging the terminal device and/or the paging moment determined by the second network device for paging the terminal device are/is later than a paging moment determined by the third network device for paging the terminal device.

In a possible implementation, the first indication information is capability information of the terminal device, and the capability information is used to indicate that the terminal device supports an enhanced paging moment calculation manner. In this implementation, the processing module is further configured to obtain the capability information.

For beneficial effects of the third network device provided in the ninth aspect and the possible implementations of the ninth aspect, refer to the beneficial effects brought by the third aspect and the possible implementations of the third aspect. Details are not described herein again.

According to a tenth aspect, an embodiment of this application provides a network device. The network device is a third network device. The third network device includes a processing module. In a possible implementation, the third network device may further include a sending module and/or a receiving module.

The processing module is configured to: obtain time information of a paging moment at which a first network device pages a terminal device, and control, based on the time information of the paging moment at which the first network device pages the terminal device, the sending module to send a first message to the first network device. The third network device is a network device that stores a terminal connection context, and the first message is used to page the terminal device. The time information of the paging moment may include, for example, an offset of a paging frame and/or an offset of a paging occasion.

For example, the processing module is specifically configured to control, before the paging moment at which the first network device pages the terminal device, the sending module to send the first message to the first network device. Alternatively, the processing module is specifically configured to: determine a paging moment time sequence based on the time information of the paging moment at which the first network device pages the terminal device and time information of a paging moment at which a second network device pages the terminal device, and control, according to the paging moment time sequence, the sending module to send the first message to the first network device. The paging moment time sequence indicates that the paging moment of the first network device is earlier than the paging moment of the second network device.

A manner in which the processing module obtains the time information of the paging moment at which the first network device pages the terminal device is not limited in this embodiment. For example, the processing module is specifically configured to receive, from a core network device through the receiving module, the time information of the paging moment at which the first network device pages the terminal device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the processing module is further configured to obtain the capability information.

In this scenario, the processing module is further configured to: obtain the time information of the paging moment at which the second network device pages the terminal device, where the paging moment at which the second network device pages the terminal device is later than the paging moment at which the first network device pages the terminal device. When the sending module is not controlled, based on the time information of the paging moment at which the second network device pages the terminal device, to send the first message to the second network device, the processing module cancels sending the first message to the second network device if the receiving module receives a second message from the first network device that pages the terminal device. The second message is used to indicate that the terminal device accesses the first network device. Alternatively, before the sending module is not controlled, based on the time information of the paging moment at which the second network device pages the terminal device, to send the first message to the second network device, the processing module controls, based on the time information of the paging moment at which the second network device pages the terminal device, the sending module to send the first message to the second network device if the receiving module does not receive a second message from the first network device.

In a possible implementation, the processing module is further configured to obtain time information of a paging moment at which the third network device pages the terminal device. When the processing module does not page the terminal device based on the time information of the paging moment at which the third network device pages the terminal device, the processing module cancels paging the terminal device if the receiving module receives a second message from the first network device. Alternatively, before the processing module does not page the terminal device based on the time information of the paging moment at which the third network device pages the terminal device, the processing module pages the terminal device based on the time information of the paging moment at which the third network device pages the terminal device if the receiving module does not receive a second message from the first network device.

In the foregoing embodiment, the second message may be, for example, a user equipment context obtaining message.

For beneficial effects of the third network device provided in the tenth aspect and the possible implementations of the tenth aspect, refer to the beneficial effects brought by the fourth aspect and the possible implementations of the fourth aspect. Details are not described herein again.

According to an eleventh aspect, an embodiment of this application provides a network device. The network device includes a processing module. In a possible implementation, the network device may further include a sending module and/or a receiving module.

The processing module is configured to: obtain first indication information, and determine, based on the first indication information, a paging moment for paging a terminal device, where the first indication information is used to indicate a manner of calculating the paging moment at which the network device pages the terminal device.

In a possible implementation, the first indication information is capability information of the terminal device, and the capability information is used to indicate that the terminal device supports an enhanced paging moment calculation manner. In this implementation, the receiving module is configured to receive a paging message from a core network device or a third network device, where the paging message is used to page the terminal device, and the paging message carries the capability information. The third network device is a network device that stores a terminal connection context. Alternatively, the receiving module is configured to receive the capability information from the core network device.

In a possible implementation, the processing module is specifically configured to: obtain time information of the paging moment based on the first indication information, and calculate the paging moment based on the time information of the paging moment. For example, the time information of the paging moment includes an offset of a paging frame and/or an offset of a paging occasion; a first offset of a paging frame and a second offset of the paging frame; or a first offset of a paging frame, a second offset of the paging frame, and an offset of a paging occasion.

A manner in which the processing module obtains the time information of the paging moment is not limited in this embodiment. For example, the processing module is specifically configured to determine the time information of the paging moment based on an identifier of a cell in which the terminal device is paged.

In a possible implementation, the sending module is configured to send the time information of the paging moment to the terminal device; or send second indication information to the terminal device, where the second indication information is used to enable an enhanced paging moment paging function.

After the processing module determines the paging moment for paging the terminal device, the processing module pages the terminal device at the paging moment for paging the terminal device. In this implementation, if the terminal device is a terminal device in an idle state, the receiving module is configured to receive an access message from the terminal device. The sending module is configured to send a second message to the core network device, where the second message is used to indicate that the terminal device accesses the network device. For example, the access message may be a radio resource control establishment request message or a radio resource control establishment complete message. The second message may be an initial user equipment message. If the terminal device is a terminal device in an inactive state, the receiving module is configured to receive an access message from the terminal device. The sending module is configured to send a second message to the third network device, where the second message is used to indicate that the terminal device accesses the network device, and the third network device is the network device that stores the terminal connection context. For example, the access message is a radio resource control connection resume request message. The second message is a user equipment context obtaining message.

After the processing module determines the paging moment for paging the terminal device, if the receiving module receives a third message from the core network device or the third network device, where the third message is used to indicate the network device to cancel paging the terminal device, the processing module is further configured to cancel paging the terminal device when a paging message for the terminal device is not sent to the terminal device.

For beneficial effects of the network device provided in the eleventh aspect and the possible implementations of the eleventh aspect, refer to the beneficial effects brought by the fifth aspect and the possible implementations of the fifth aspect. Details are not described herein again.

According to a twelfth aspect, an embodiment of this application provides a terminal device. The terminal device includes a processing module. In a possible implementation, the terminal device may further include a sending module and/or a receiving module.

The processing module is configured to: determine that a network device corresponding to a cell on which the terminal device camps supports an enhanced paging moment paging function; determine a monitoring moment of a paging message based on time information of a paging moment; and monitor the paging message at the monitoring moment.

In a possible implementation, the processing module is specifically configured to: obtain the time information of the paging moment, and determine, based on the time information of the paging moment, that the network device supports the enhanced paging moment paging function. Alternatively, the receiving module receives second indication information from the network device, where the second indication information is used to enable the enhanced paging moment paging function. The processing module is specifically configured to determine, based on the second indication information, that the network device supports the enhanced paging moment paging function.

In the foregoing embodiment, the time information of the paging moment may include an offset of a paging occasion and/or an offset of a paging frame; a first offset of a paging frame and a second offset of the paging frame; or a first offset of a paging frame, a second offset of the paging frame, and an offset of a paging occasion.

A manner in which the processing module obtains the time information of the paging moment is not limited in this embodiment. The processing module is specifically configured to determine the time information of the paging moment based on an identifier of the cell. Alternatively, the receiving module is configured to receive the time information of the paging moment from the network device.

In a possible implementation, the sending module is configured to send capability information to a core network device, the network device, or a third network device, where the capability information is used to indicate that the terminal device supports an enhanced paging moment calculation manner, and the third network device is a network device that stores a terminal connection context.

For beneficial effects of the terminal device provided in the twelfth aspect and the possible implementations of the twelfth aspect, refer to the beneficial effects brought by the sixth aspect and the possible implementations of the sixth aspect. Details are not described herein again.

According to a thirteenth aspect, an embodiment of this application provides a core network device. The core network device includes a processor and a memory.

The memory is configured to store computer-executable program code, and the program code includes instructions. When the processor executes the instructions, the instructions enable the core network device to perform the method provided in the first aspect or the possible implementations of the first aspect, or to perform the method provided in the second aspect or the possible implementations of the second aspect.

According to a fourteenth aspect, an embodiment of this application provides a network device. The network device includes a processor and a memory.

The memory is configured to store computer-executable program code, and the program code includes instructions. When the processor executes the instructions, the instructions enable the network device to perform the method provided in the third aspect or the possible implementations of the third aspect, to perform the method provided in the fourth aspect or the possible implementations of the fourth aspect, or to perform the method provided in the fifth aspect or the possible implementations of the fifth aspect.

According to a fifteenth aspect, an embodiment of this application provides a terminal device. The terminal device includes a processor, a memory, a receiver, and a transmitter. Both the receiver and the transmitter are coupled to the processor. The processor controls a receiving action of the receiver, and the processor controls a sending action of the transmitter.

The memory is configured to store computer-executable program code, and the program code includes instructions. When the processor executes the instructions, the instructions enable the terminal device to perform the method provided in the sixth aspect or the possible implementations of the sixth aspect.

According to a sixteenth aspect, an embodiment of this application provides a communication apparatus, including a unit, a module, or a circuit configured to perform the method provided in the first aspect or the possible implementations of the first aspect, or the method provided in the second aspect or the possible implementations of the second aspect. The communication apparatus may be a core network device, or may be a module used in the core network device, for example, may be a chip used in the core network device.

According to a seventeenth aspect, an embodiment of this application provides a communication apparatus, including a unit, a module, or a circuit configured to perform the method provided in the third aspect or the possible implementations of the third aspect, the method provided in the fourth aspect or the possible implementations of the fourth aspect, or the method provided in the fifth aspect or the possible implementations of the fifth aspect. The communication apparatus may be a network device, or may be a module used in the network device, for example, may be a chip used in the network device.

According to an eighteenth aspect, an embodiment of this application provides a communication apparatus, including a unit, a module, or a circuit configured to perform the method provided in the sixth aspect or the possible implementations of the sixth aspect. The communication apparatus may be a terminal device, or may be a module used in the terminal device, for example, may be a chip used in the terminal device.

According to a nineteenth aspect, an embodiment of this application provides a chip. The chip stores a computer program. When the computer program is executed by the chip, the method provided in the first aspect or the possible implementations of the first aspect, the method provided in the second aspect or the possible implementations of the second aspect, the method provided in the third aspect or the possible implementations of the third aspect, the method provided in the fourth aspect or the possible implementations of the fourth aspect, the method provided in the fifth aspect or the possible implementations of the fifth aspect, or the method provided in the sixth aspect or the possible implementations of the sixth aspect is implemented.

According to a twentieth aspect, an embodiment of this application provides a computer program product including instructions. When the computer program product runs on a computer, the computer is enabled to perform the method in the first aspect or the possible implementations of the first aspect, the method provided in the second aspect or the possible implementations of the second aspect, the method provided in the third aspect or the possible implementations of the third aspect, the method provided in the fourth aspect or the possible implementations of the fourth aspect, the method provided in the fifth aspect or the possible implementations of the fifth aspect, or the method provided in the sixth aspect or the possible implementations of the sixth aspect.

According to a twenty-first aspect, an embodiment of this application provides a computer-readable storage medium. The computer-readable storage medium stores instructions. When the instructions are run on a computer, the computer is enabled to perform the method in the first aspect or the possible implementations of the first aspect, the method provided in the second aspect or the possible implementations of the second aspect, the method provided in the third aspect or the possible implementations of the third aspect, the method provided in the fourth aspect or the possible implementations of the fourth aspect, the method provided in the fifth aspect or the possible implementations of the fifth aspect, or the method provided in the sixth aspect or the possible implementations of the sixth aspect.

According to the paging method, the device, and the storage medium provided in the embodiments of this application, the paging moments for paging the terminal device in various cells are dispersed. In this way, after the terminal device accesses the cell, the terminal device may be no longer paged in the another cell in which paging of the terminal device is not started. Therefore, paging overheads of paging the terminal device can be reduced in the paging area.

**BRIEF DESCRIPTION OF DRAWINGS**

FIG. 1 is a schematic diagram of an architecture of a mobile communication system to which an embodiment of this application is applied;
FIG. 2 is a schematic flowchart of paging a terminal device in a conventional technology;
FIG. 3 is another schematic flowchart of paging a terminal device in a conventional technology;
FIG. 4 is a schematic diagram of a paging scenario;
FIG. 5 is a flowchart of a paging method according to an embodiment of this application;
FIG. 6 is a schematic diagram 1 of a paging method according to an embodiment of this application;
FIG. 7 is a flowchart of another paging method according to an embodiment of this application;
FIG. 8 is a flowchart of still another paging method according to an embodiment of this application;
FIG. 9 is a schematic diagram 2 of a paging method according to an embodiment of this application;
FIG. 10 is a flowchart of still another paging method according to an embodiment of this application;
FIG. 11 is a flowchart of still another paging method according to an embodiment of this application;
FIG. 12 is a flowchart of still another paging method according to an embodiment of this application;
FIG. 13 is a flowchart of still another paging method according to an embodiment of this application;
FIG. 14 is a flowchart of still another paging method according to an embodiment of this application;
FIG. 15 is a flowchart of still another paging method according to an embodiment of this application;
FIG. 16 is a flowchart of still another paging method according to an embodiment of this application;
FIG. 17 is a schematic diagram of a structure of a core network device according to an embodiment of this application;
FIG. 18 is a schematic diagram of a structure of another core network device according to an embodiment of this application;
FIG. 19 is a schematic diagram of a structure of a network device according to an embodiment of this application;
FIG. 20 is a schematic diagram of a structure of another network device according to an embodiment of this application;
FIG. 21 is a schematic diagram of a structure of still another network device according to an embodiment of this application;
FIG. 22 is a schematic diagram of a structure of a terminal device according to an embodiment of this application;
FIG. 23 is a schematic diagram of a structure of a communication apparatus according to an embodiment of this application; and
FIG. 24 is a schematic diagram of a structure of another communication apparatus according to an embodiment of this application.

**DESCRIPTION OF EMBODIMENTS**

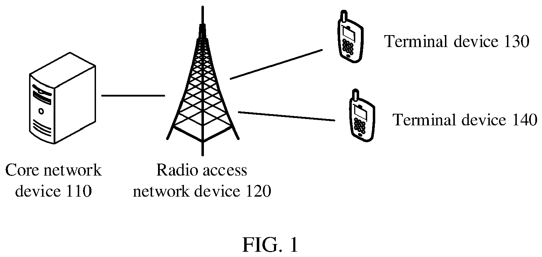

FIG. 1 is a schematic diagram of an architecture of a mobile communication system to which an embodiment of this application is applied. As shown in FIG. 1, the mobile communication system may include a core network device 110, a radio access network device 120, and at least one terminal device (for example, a terminal device 130 and a terminal device 140 in FIG. 1). The terminal device is connected to the radio access network device 120 in a wireless manner, and the radio access network device 120 is connected to the core network device 110 in a wireless or wired manner. The core network device 110 and the radio access network device 120 may be different independent physical devices, or functions of the core network device 110 and logical functions of the radio access network device 120 may be integrated on a same physical device, or some of functions of the core network device 110 and some of functions of the radio access network device 120 may be integrated on one physical device. The terminal device may be at a fixed location, or may be mobile. FIG. 1 is only a schematic diagram. The mobile communication system may further include another network device, for example, may further include a wireless relay device and a wireless backhaul device, which are not shown in FIG. 1. A quantity of core network devices 110, a quantity of radio access network devices 120, and a quantity of terminal devices included in the mobile communication system are not limited in this embodiment of this application.

The core network (core network, CN) device 110 may be different devices in different mobile communication systems. For example, in a 3G mobile communication system, the core network device 110 may be a serving general packet radio service (general packet radio service, GPRS) support node (serving GPRS support node, SGSN) and/or a gateway GPRS support node (gateway GPRS support node, GGSN). In a 4G mobile communication system, the core network device 110 may be a mobility management entity (mobility management entity, MME) and/or a serving gateway (serving gateway, S-GW). In a 5G mobile communication system, the core network device 110 may be an access and mobility management function (access and mobility management function, AMF) network element, a session management function (session management function, SMF) network element, or a user plane function (user plane function, UPF) network element.

The radio access network device 120 is an access device used by a terminal device to access the mobile communication system in a wireless manner, and may be a global system for mobile communications (global system for mobile communications, GSM), a base transceiver station (base transceiver station, BTS) in a code division multiple access (code division multiple access, CDMA) network, a NodeB (NodeB, NB) in wideband code division multiple access (wideband code division multiple access, WCDMA), an evolved (evolved) NB (eNB or eNodeB) in long term evolution (long term evolution, LTE), a radio controller in a cloud radio access network (cloud radio access network, CRAN) scenario, a base station in a 5G mobile communication system or a new radio (new radio, NR) communication system, a base station in a future mobile communication system, an access node in a Wi-Fi system, an access network device in a future evolved PLMN, a wearable device, a vehicle-mounted device, or the like. A specific technology and a specific device form used by the radio access network device 120 are not limited in this embodiment of this application. In this embodiment of this application, the radio access network device 120 is referred to as a network device for short. Unless otherwise specified, in this embodiment of this application, the network device is the radio access network device 120. In addition, in this embodiment of this application, the terms 5G and NR may be equivalent.

The terminal device may also be referred to as a terminal (Terminal), user equipment (user equipment, UE), a mobile station (mobile station, MS), a mobile terminal (mobile terminal, MT), an access terminal, a UE unit, a UE station, a mobile station, a remote station, a remote terminal, a mobile device, a UE terminal, a wireless communication device, a UE agent, a UE apparatus, or the like. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved public land mobile network (public land mobile network, PLMN), or the like.

The radio access network device 120 and the terminal device may be deployed on land, including an indoor device, an outdoor device, a handheld device, or a vehicle-mounted device; may be deployed on water; or may be deployed on an airplane, a balloon, and a satellite in the air. Application scenarios of the radio access network device 120 and the terminal device are not limited in this embodiment of this application.

Communication between the radio access network device 120 and the terminal device may be performed by using a licensed spectrum (licensed spectrum), or an unlicensed spectrum (unlicensed spectrum), or both the licensed spectrum and the unlicensed spectrum. The radio access network device 120 and the terminal device may communicate with each other by using a spectrum below 6 gigahertz (gigahertz, GHz), or may communicate with each other by using a spectrum above 6 GHz, or may communicate with each other by using both a spectrum below 6 GHz and a spectrum above 6 GHz. A spectrum resource used between the radio access network device 120 and the terminal device is not limited in this embodiment of this application.

With reference to the architecture of the mobile communication system shown in FIG. 1, the following describes paging by using an NR mobile communication system as an example.

Paging (paging) is used to notify a terminal device in an idle (idle) state or a terminal device in an inactive state to establish a service; or is used to notify a terminal device that cell system information changes, so that the terminal device rereads a changed system broadcast message; or is used to notify a terminal device to receive earthquake and tsunami warning system (earthquake and tsunami warning system, ETWS) information. It should be understood that both the idle (idle) state and the inactive state are radio resource control (radio resource control, RRC) states of the terminal device. The terminal device in the idle state is a terminal device that camps on a cell served by a network device but does not establish an RRC connection to the network device. The terminal device in the inactive state may also be referred to as a terminal device in an RRC connected inactive state (RRC_INACTIVE for short). In this state, the terminal device still maintains a connection to a core network, and the terminal device may move in a radio access network notification area (RAN notification area, RNA) without notifying an access network device. When the terminal device is in the RRC_INACTIVE state, a last network device serving the terminal device reserves a context of the terminal device and a user plane connection and a control plane connection between the network device and a core network device. Therefore, from the perspective of the core network, the terminal device in the RRC_INACTIVE state is still in a connected state.

Currently, paging may be classified into cell paging and paging area paging based on a paging sending range. The cell paging refers to paging the terminal device in a cell, and is mainly used to notify the terminal device that cell system information changes. The paging area paging refers to paging a terminal device in an entire paging area, and the paging area paging is mainly used to notify a terminal device in the idle state or a terminal device in the inactive state to establish a service. In other words, when the paging area paging is triggered, paging of a same terminal device occurs in a plurality of cells. For the terminal device in the idle state, the paging area may be, for example, a cell in a tracking area (tracking area, TA) list. For the terminal device in the inactive state, the paging area may be, for example, all cells in an RNA area of the terminal device.

The following describe how to page a terminal device in a paging area in a conventional technology by using an NR system as an example.

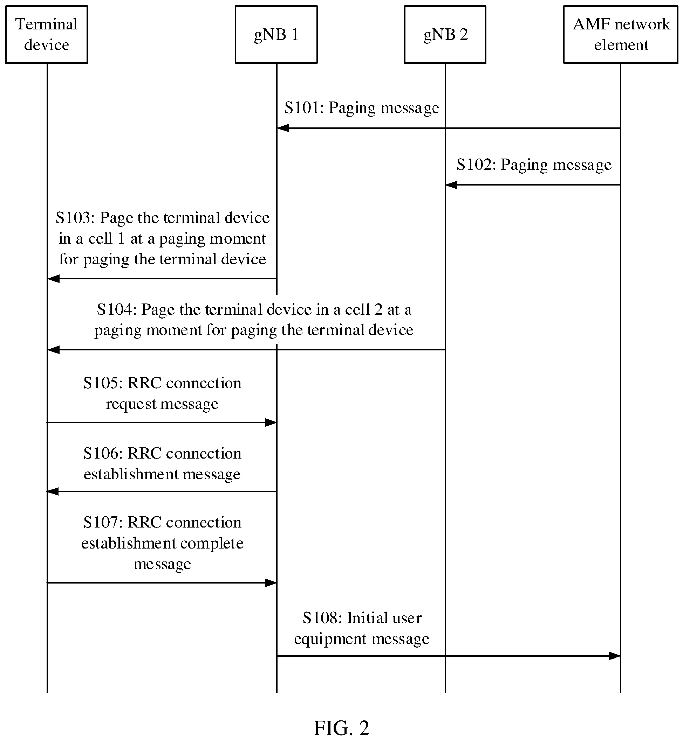

FIG. 2 is a schematic flowchart of paging a terminal device in a conventional technology. An example in which a paging area includes a cell 1 served by a gNB 1 and a cell 2 served by a gNB 2 is used. It is assumed that the terminal device camps on the gNB 1. As shown in FIG. 2, a procedure of paging the terminal device in an idle state in the paging area may include the following steps.

S101: An AMF network element sends a paging message to the gNB 1.

The paging message is used to indicate the gNB 1 to page the terminal device.

S102: The AMF network element sends a paging message to the gNB 2.

The paging message is used to indicate the gNB 2 to page the terminal device.

S103: The gNB 1 pages the terminal device in the cell 1 at a paging moment for paging the terminal device.

S104: The gNB 2 pages the terminal device in the cell 2 at a paging moment for paging the terminal device.

S105: The terminal device sends an RRC connection request message to the gNB 1.

The RRC connection request message is used to request to establish an RRC connection to the gNB 1.

S106: The gNB 1 sends an RRC connection establishment message to the terminal device.

The RRC connection establishment message is used to establish the RRC connection to the terminal device.

S107: The terminal device sends an RRC connection establishment complete message to the gNB 1.

The RRC connection establishment complete message is used to notify the gNB 1 that RRC connection establishment is completed. The RRC connection establishment complete message may carry a non-access stratum (non-access stratum, NAS) message.

S108: The gNB 1 sends an initial user equipment message to the AMF network element.

The initial user equipment message is used by the gNB 1 to send, to the AMF network element, the NAS message received from the terminal device.

In this way, paging the terminal device in the idle state in the paging area is completed.

It can be learned from the procedure shown in FIG. 2 that for the terminal device in the idle state, when initiating paging in the paging area, a core network device needs to notify all cells in the paging area to send paging.

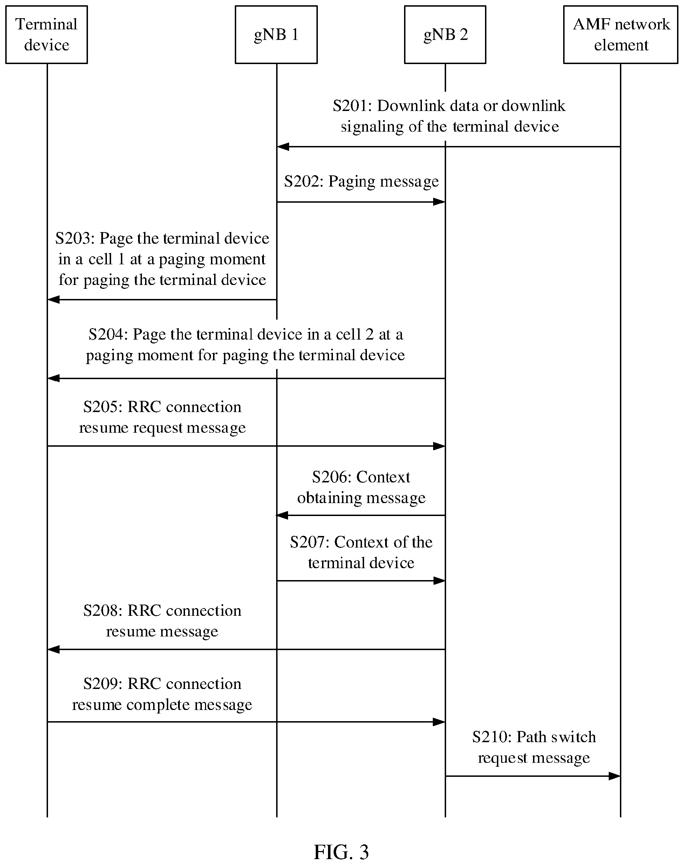

FIG. 3 is another schematic flowchart of paging a terminal device in a conventional technology. An example in which a paging area includes a cell 1 served by a gNB 1 and a cell 2 served by a gNB 2 is used. It is assumed that a last network device serving the terminal device is the gNB 1, but the terminal device has now moved to a coverage area of the cell 2. As shown in FIG. 3, a procedure of paging the terminal device in an inactive state in the paging area may include the following steps.

S201: An AMF network element sends downlink data or downlink signaling of the terminal device to the gNB 1.

S202: The gNB 1 sends a paging message to the gNB 2.

The paging message is used to indicate the gNB 2 to page the terminal device.

S203: The gNB 1 pages the terminal device in the cell 1 at a paging moment for paging the terminal device.

S204: The gNB 2 pages the terminal device in the cell 2 at a paging moment for paging the terminal device.

S205: The terminal device sends an RRC connection resume request message to the gNB 2.

The RRC connection resume request message is used to request to resume an RRC connection to the gNB 2.

S206: The gNB 2 sends a context obtaining message to the gNB 1.

The context obtaining message is used to obtain, from the gNB 1, a context of the terminal device stored in the gNB 1.

S207: The gNB 1 sends the context of the terminal device to the gNB 2.

S208: The gNB 2 sends an RRC connection resume message to the terminal device.

The RRC connection resume message is used to resume the RRC connection to the terminal device.

S209: The terminal device sends an RRC connection resume complete message to the gNB 2.

The RRC connection resume complete message is used to notify the gNB 1 that RRC connection resume is completed.

S210: The gNB 2 sends a path switch request message to the AMF network element.

The path switch request message is used to request to switch an RRC connection path of the terminal device from the gNB 1 to the gNB 2.

In this way, paging the terminal device in the inactive state in the paging area is completed.

It can be learned from the procedure shown in FIG. 3 that for the terminal device in the inactive state, after the downlink data or the downlink signaling of the terminal device reaches a last network device gNB 1 serving the terminal device, the gNB 1 notifies another network device in the paging area (that is, an RNA area of the terminal device) to initiate paging, and the gNB 1 also initiates paging. If the terminal device initiates an RRC connection resume request to another network device, the another network device obtains the context of the terminal device from the last network device gNB 1 serving the terminal device, and resumes an RRC connection for the terminal device.

Currently, a terminal device in an idle state or the terminal device in the inactive state usually monitors a paging message at a paging moment of the terminal device. To be specific, in one paging cycle, the terminal device in the idle state or the terminal device in the inactive state monitors the paging message only at the paging moment of the terminal device in a discontinuous reception (discontinuous reception, DRX) manner. The paging moment of the terminal device herein is a paging moment at which the terminal device is paged in a cell on which the terminal device camps. For one paging cycle, there is only one paging moment of the terminal device. However, for a cell, there are nB paging moments, and different terminal devices camping on the cell determine a to-be-used paging moment in the nB paging moments based on international mobile subscriber identities (international mobile subscriber identities, IMSIs) of the terminal devices. In this manner, power consumption of monitoring the paging message by the terminal device can be reduced, and the terminal devices camping on the cell can be dispersed to different paging moments for paging, thereby avoiding congestion.

For calculation of a paging moment (paging moment), a paging frame (paging frame, PF) needs to be first calculated, and then a specific paging occasion (paging occasion, PO) is calculated in the PF, to obtain the paging moment based on the PF and the PO. It should be understood that the PF herein is one radio frame, and one PF may include at least one PO (for example, one paging frame may include a maximum of four POs). The paging moment may be a time unit, and the time unit may be used to transmit a physical downlink control channel (physical downlink control channel, PDCCH) that can carry a paging message. The PDCCH may be a PDCCH scrambled by a radio network temporary identifier (radio network temporary identifier, RNTI). Optionally, the paging moment may be, for example, a time unit such as a radio subframe, a mini-slot, or a symbol. Optionally, duration of one paging occasion may be the same as duration of the paging moment.

In the conventional technology, the network device and the terminal device calculate a PF for paging the terminal device by using the following formula (1):

$$(SFN + PF\_offset) \bmod T = (T \operatorname{div} N) * (UE\_ID \bmod N) \quad (1)$$

SFN represents a system frame number (system frame number, SFN), and PF_offset represents an offset (which may also be referred to as a shift) of the paging frame, and is used to adjust a location of the paging frame in a paging cycle.

T represents the paging cycle of the terminal device, and a value of T is a smaller one of DRX broadcast in a system message and DRX indicated in a paging message.

N represents a quantity of PFs in the paging cycle. N = min(T, nB). nB represents a total quantity of POs in the paging cycle, nB is a higher layer configuration parameter, and the network device may broadcast nB to the terminal device through a system message. For example, a value of nB may be any one of 4T, 2T, T, T/2, T/4, T/8, T/16, T/32, and the like.

UE_ID represents an identifier of the terminal device. UE_ID = IMSI mod 1024.

div is an exact division function.

A mod function is a modulo function, and (SFN + PF_offset) mod T represents a remainder obtained after a division operation is performed on (SFN + PF_offset) and T.

After obtaining the PF by using the foregoing formula (1), the network device and the terminal device calculate, by using the following formula (2) and Table 1, a specific PO for paging the terminal device:

$$i\_s = floor(UE\_ID/N) \bmod Ns \ (2),$$

where

i_s represents an index of the PO, Ns represents a quantity of POs in one PF, Ns = max(1, nB/T), that is, Ns is a larger one of 1 and nB/T, and floor() is a round-down function.

After i_s is calculated by using the foregoing formula (2), the PO for paging the terminal device may be obtained by querying the following Table 1.

**Table 1**

| Ns | PO | | | |
|---|---|---|---|---|
| | i_s = 0 | _s = 1 | i_s = 2 | i_s = 3 |
| 1 | 9 | N/A | N/A | N/A |
| 2 | 4 | 9 | N/A | N/A |
| 4 | 0 | 4 | 5 | 9 |

The paging moment for paging the terminal device may be obtained based on the PF and the PO. An example in which the paging moment is a subframe is used. Assuming that the PF obtained through calculation according to the foregoing formula (1) is the Xth radio frame and the PO obtained according to the foregoing formula (2) and Table 1 is the 5th subframe, the paging moment is the 5th subframe of the Xth radio frame.

It should be understood that, when the paging moment is calculated by using the foregoing formulas, in a case of inconsecutive paging frames, PF_offset in the formula (1) may be used to cause the paging moment for paging the terminal device to be close to a location of a synchronization signal block. When paging frames are consecutive (that is, each frame in the paging cycle is a paging frame), the offset PF_offset cannot be configured, that is, a value of PF_offset in the foregoing formula is 0. When a paging frame interval is two frames, that is, there is one paging frame in every two frames in the paging cycle, the offset PF_offset can cause the paging frame to move forward and backward by only one frame. By analogy, it can be learned that the offset PF_offset is limited by the paging frame interval, and a paging frame location can be adjusted only within the paging frame interval, so that the paging moment can be close to the synchronization signal block. It should be noted that although different values of the offset PF_offset may be configured for the terminal device in different cells, because the offset PF_offset is limited by the paging frame interval, paging moments of a same terminal device cannot be dispersed in the entire paging cycle. Especially when paging frames are consecutively configured, the offset PF_offset cannot be configured.

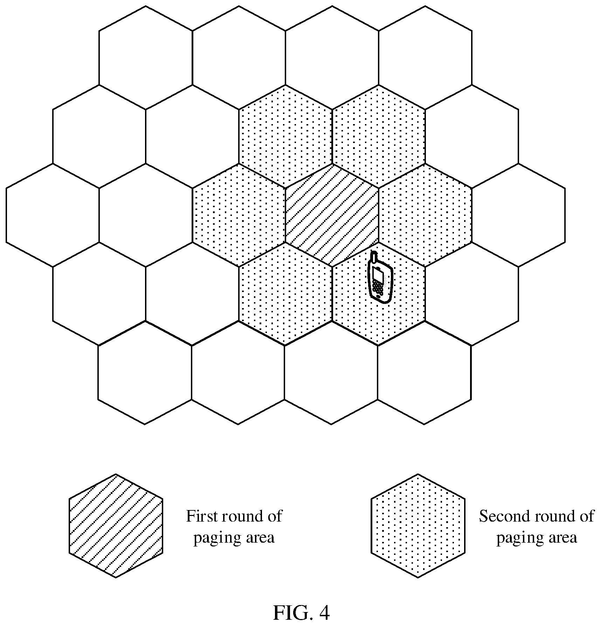

One paging area may include hundreds of cells. Therefore, when the terminal device is paged in the paging area paging manner shown in FIG. 2 or FIG. 3, the terminal device is paged in the hundreds of cells. Consequently, overheads of paging the terminal device are high in the paging area. FIG. 4 is a schematic diagram of a paging scenario. As shown in FIG. 4, currently, a paging area paging manner of round-by-round paging is proposed. A terminal device in an idle state is used as an example. A core network device first pages the terminal device in a cell in which the terminal device finally enters the idle state. If the terminal device cannot be paged, the core network device expands a round of paging area to page the terminal device. To be specific, the core network device pages the terminal device in a manner of expanding a paging area round by round, until the terminal device is paged in a cell of the paging area or paging is completed in an entire paging area. The round-by-round paging manner is applicable to a terminal device with weak mobility. If the terminal device moves, the terminal device may not be paged in the first several rounds of paging. Consequently, a paging latency in the paging area is large, and a communication requirement cannot be met.

Therefore, how to reduce paging overheads of paging the terminal device in the paging area without increasing a paging latency is an urgent problem to be resolved.

In consideration of the foregoing problem, an embodiment of this application provides a paging method.

Paging moments for paging a terminal device in various cells are dispersed. In this way, after the terminal device accesses a cell, the terminal device may be no longer paged in another cell in which paging of the terminal device is not started. Therefore, paging overheads of paging the terminal device can be reduced in a paging area. The method in this embodiment of this application is applicable to any mobile communication system, for example, an LTE communication system, an NR communication system, or another future communication system.

The paging method provided in the embodiments of this application is described in detail by using some embodiments. The following several embodiments may be combined with each other, and a same or similar concept or process may not be described repeatedly in some embodiments.

For ease of description of the embodiments of this application, the following application document describes the embodiments of this application by using an NR system and a paging area including a cell served by a first network device and a cell served by a second network device as an example. It should be understood that each of the first network device and the second network device may include at least one cell. For ease of description, an example in which a network device (for example, the first network device and/or the second network device) includes one cell is used for description in the following embodiments. Therefore, in the following embodiments, paging a terminal device by the network device is equivalent to paging the terminal device in a cell served by the network device, and accessing the network device by the terminal device is equivalent to accessing the cell served by the network device by the terminal device. This is not distinguished in the following embodiments.

In the following embodiments, the terminal device supports an enhanced paging moment calculation manner. In the enhanced paging moment calculation manner, a formula different from that in an existing paging moment calculation manner is used, and different paging moment offsets are configured between cells, so that paging moments for paging the terminal device that are determined for various cells in the paging area may be dispersed in different paging frames of a paging cycle, and are not be concentrated in a same paging frame. In this paging moment calculation manner, the terminal device may be paged at different moments in different cells in the paging area. The foregoing existing paging moment calculation manner may be a calculation manner shown in the formula (1), the formula (2), or Table 1.

In some embodiments, the enhanced paging moment calculation manner may also be referred to as a disperse paging moment calculation manner. It should be understood that when a quantity of paging frames included in the paging cycle is less than a quantity of cells in the paging area, paging moments for paging the terminal device that are determined for some cells may be the same. For a manner of calculating the paging moment, refer to subsequent descriptions. In addition, the name of the foregoing paging moment calculation manner is merely used to indicate that the paging moment calculation manner is different from the existing paging moment calculation manner, and the paging moment calculation manner may also be referred to as a first paging moment calculation manner, a second paging moment calculation manner, or the like. That is, the name of the paging moment calculation manner is merely used to distinguish from the existing manner, and does not constitute a limitation on the paging moment calculation manner.

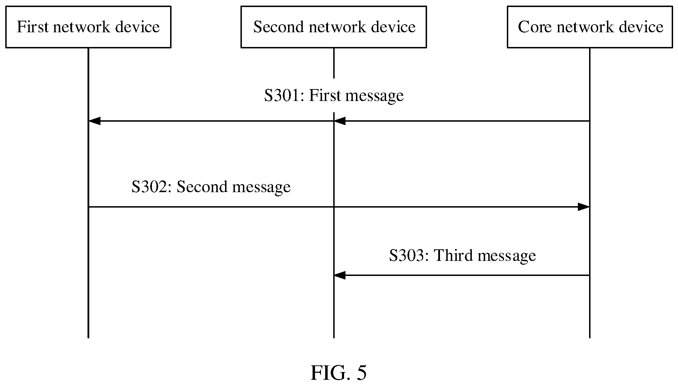

FIG. 5 is a flowchart of a paging method according to an embodiment of this application. This embodiment relates to a specific process of paging a terminal device in an idle state in a paging area. As shown in FIG. 5, the method includes the following steps.

S301: A core network device sends a first message to a first network device and a second network device.

The first message is used to indicate the first network device and the second network device to page the terminal device. The first message includes first indication information, and the first indication information is used by the first network device and the second network device to determine a manner of calculating a paging moment for paging the terminal device.

S302: The first network device sends a second message to the core network device.

Correspondingly, the core network device receives the second message. The second message is used to indicate that the terminal device accesses the first network device.

S303: The core network device sends a third message to the second network device.

The third message is used to indicate the second network device to cancel paging the terminal device.

In this embodiment, when the core network device needs to page the terminal device in the idle state, the core network device may trigger, by sending the first message to the first network device and the second network device in the paging area, the first network device and the second network device to page the terminal device. In some embodiments, the first message may also be referred to as a paging message. Optionally, the first message may carry at least one of an identifier of the terminal device, a DRX cycle, paging area information, and the like. It should be understood that the paging area information herein may include information about a cell in which the terminal device needs to be paged this time. For example, the paging area information may be information about a group of cells, or may be information about a group of tracking area (Tracking Area, TA) areas, and each TA area includes at least one cell.

Different from a paging message in a conventional technology, the first message in this embodiment includes the first indication information, and the first indication information is used to indicate that the terminal supports or enables an enhanced paging moment calculation manner, so that the first network device and the second network device determine, according to the indication, the manner of calculating the paging moment for paging the terminal device. For example, if the terminal supports the enhanced paging moment calculation manner, and a network device also enables an enhanced paging moment calculation function, the network device may determine to use the enhanced paging moment calculation manner when calculating a paging moment for the terminal. The enhanced paging moment calculation manner is used, so that paging moments for paging the terminal device that are determined for various cells in the paging area may be dispersed in different paging frames of a paging cycle, and are not be concentrated in a same paging frame. In other words, the terminal device may be paged at different moments in different cells in the paging area. It should be understood that when a quantity of paging frames included in the paging cycle is less than a quantity of cells in the paging area, paging moments for paging the terminal device that are determined for some cells may be the same.

For example, it is assumed that the paging cycle includes 128 radio frames, and each radio frame is a paging frame. In this scenario, the paging moment determined by the first network device in the foregoing paging moment calculation manner may be the 1st radio frame, and the paging moment determined by the second network device in the foregoing paging moment calculation manner may be the 41st radio frame. Alternatively, the paging moment determined by the first network device in the foregoing paging moment calculation manner may be the 41st radio frame, and the paging moment determined by the second network device in the foregoing paging moment calculation manner may be the 1st radio frame. Alternatively, both paging moments determined by the first network device and the second network device in the foregoing paging moment calculation manner are the 1st radio frame. Alternatively, both paging moments determined by the first network device and the second network device in the foregoing paging moment calculation manner are the 41st radio frame.

Optionally, the core network device may obtain capability information of the terminal device before performing the method embodiment shown in FIG. 5. The capability information is used to indicate that the terminal device supports the enhanced paging moment calculation manner. In a possible implementation, the core network device may receive the capability information of the terminal device from the terminal device or a network device accessed by the terminal device. For example, when the terminal device performs a registration procedure, a path switch procedure, a location update procedure, or the like, the core network device may receive the capability information of the terminal device from the terminal device or the network device accessed by the terminal device. In this scenario, in a possible implementation, the first indication information may be the capability information of the terminal device.

It should be understood that the first indication information may be carried in the first message and sent to the first network device and the second network device, or may be sent to the first network device and the second network device through a message other than the first message. FIG. 5 is a schematic diagram of a paging procedure in which an example in which the first indication information is carried in the first message is used. For example, when the first indication information is the capability information of the terminal device, the capability information of the terminal device may be sent by the core network device to the first network device and the second network device through the first message, or may be sent by the core network device to the first network device and the second network device through another message.

The foregoing manner of calculating the paging moment may be understood as formulas for calculating indexes of a PF and a PO. Optionally, the terminal device and the network device may obtain time information of a paging moment for paging the terminal device, and further determine, based on the time information, the moment for paging the terminal device. The time information of the paging moment herein may include, for example, an offset of a paging frame and/or an offset of a paging occasion; a first offset of a paging frame and a second offset of the paging frame; or a first offset of a paging frame, a second offset of the paging frame, and an offset of a paging occasion. In other words, the time information of the paging moment for paging the terminal device can be used to determine the moment for paging the terminal device. In some embodiments, the time information of the paging moment for paging the terminal device may also be referred to as a paging parameter. It should be understood that the paging parameter corresponds to a cell, that is, each cell corresponds to one paging parameter, and different values may be configured for paging parameters of different cells, so that the terminal device may have different paging moments in different cells. It should be noted that, to ensure that the terminal device accesses one network device in the paging area and the core network device cancels paging of the terminal device by another network device in the paging area in a timely manner, a time interval between paging moments at which any two network devices in the paging area page a same terminal device may be greater than time required by the terminal device to access a network, for example, 20 ms. An example in which a DRX cycle (which may also be referred to as a paging cycle) of the terminal device is 640 ms is used. In this case, a total of 32 paging moments may be dispersed in the paging cycle. If a quantity of network devices or cells in the paging area exceeds 32, some network devices may page the terminal device at a same paging moment or the terminal device may be paged in some cells at a same paging moment.

In a possible implementation, an example in which the time information of the paging moment includes the offset of the paging frame is used. In this case, a formula for calculating the PF in this embodiment of this application may be shown in the following formula (3):

$$(SFN + PF\_offset\ (new))\ mod\ T = (T\ div\ N)\ *\ (UE\_ID\ mod\ N)\ (3)$$

PF_offset (new) represents the offset of the paging frame, and is used to adjust a location of the paging frame in the paging cycle. A value of PF_offset (new) is greater than that of PF_offset in the existing formula (1) for calculating the PF, so that paging moments for paging the terminal device that are determined for cells in the paging area are dispersed. It should be understood that the value of PF_offset may be specifically determined based on a communication requirement. For example, the value of PF_offset may reach 256 frames, and is unrelated to a paging frame interval in the paging cycle.

In this implementation, the existing formula (2) for calculating the index of the PO may continue to be used as a formula for calculating the index of the PO. Alternatively, an offset PO_offset of a paging occasion may be added to the existing formula (2), and the index of the PO is calculated by using the following formula (4). That is, in this implementation, in addition to the offset of the paging frame, the time information of the paging moment further includes the offset of the paging occasion.

$$i\_s = floor(UE\_ID/N + PO\_offset)\ mod\ Ns\ (4)$$

PO_offset represents the offset of the paging occasion, and is used to adjust a location of the paging occasion in the paging frame, so that paging moments for paging the terminal device that are determined for cells in the paging area are dispersed. It should be understood that the value of PO_offset may be specifically determined based on a communication requirement. In a possible implementation, the existing formula (2) for calculating the PF may be used as the formula for calculating the PF in this embodiment of this application, but the index of the PO is calculated in a manner shown in the foregoing formula (4), so that paging moments for paging the terminal device that are determined for cells in the paging area are dispersed. That is, in this implementation, the time information of the paging moment includes the offset of the paging occasion.

In a possible implementation, an example in which the time information of the paging moment includes the first offset of the paging frame and the second offset of the paging frame is used. In this case, a formula for calculating the PF in this embodiment of this application may be shown in the following formula (5):

$$(SFN + PF\_offset + PF\_shift)\ mod\ T = (T\ div\ N)\ *\ (UE\_ID\ mod\ N)\ (5)$$

It should be understood that a value of PF_offset in the existing formula (1) is still used for PF_offset in the foregoing formula (5). For ease of differentiation, PF_offset may be referred to as the first offset of the paging frame. The second offset PF_shift of the paging frame is newly added to the formula (5) based on PF_offset. The first offset of the paging frame and the second offset of the paging frame are used, so that the terminal device may have different paging moments in different cells, and paging moments for paging the terminal device that are determined for cells in the paging area are dispersed. A value of PF_shift may be determined based on a communication requirement. For example, the value of PF_shift may reach 256 frames, and is unrelated to the paging frame interval in the paging cycle. In this manner, when a small change is made to an existing PF calculation manner, the paging moments for paging the terminal device that are determined for the cells in the paging area are dispersed.

In this implementation, after obtaining the PF by using the foregoing formula (5), the network device and the terminal device obtain, by using the existing formula (2), the index of the PO for paging the terminal device, or obtain the index of the PO for paging the terminal device by using the foregoing formula (4) to which PO_offset is added, or the like.

After the indexes of the PF and the PO are obtained in any one of the foregoing manners, the specific PO for paging the terminal device may be obtained through table lookup in Table 1, and the paging moment is further determined based on the PF and the PO. It should be understood that the foregoing calculation manners of calculating the indexes of the PF and the PO are merely examples, and any paging moment calculation manner that enables the paging moments for paging the terminal device that are determined for the cells in the paging area to be dispersed is applicable to this embodiment of this application.

After the first network device and the second network device receive the first message sent by the core network device, if the first network device and the second network device support the paging moment calculation manner indicated by the first indication information and the first network device and the second network device have also enabled the enhanced paging moment calculation function, the first network device and the second network device may determine, in the calculation manner described in this embodiment, the paging moments at which the first network device and the second network device page the terminal device, and page the terminal device at the paging moments by using paging messages. If the first network device and/or the second network device do/does not support the paging moment calculation manner indicated by the first indication information, the first network device and/or the second network device may determine, in an existing paging moment calculation manner, paging moments/moment at which the first network device and/or the second network device page/pages the terminal device. Details are not described.

The first network device is used as an example. If the first network device supports the paging moment calculation manner indicated by the first indication information, the first network device may obtain the time information of the paging moment based on the first indication information, and further calculate, based on the time information of the paging moment, the paging moment for paging the terminal device. The time information of the paging moment may be preset, or may be determined by the first network device based on an identifier of a cell in which the terminal device is paged. When the time information of the paging moment is determined by the first network device based on the identifier of the cell in which the terminal device is paged, the following formula may be used.

If the time information of the paging moment includes the offset PF_offset (new) of the paging frame, PF_offset (new) may be determined by using the following formula (6):

$$PF\_offset\ (new) = PF\_offset + Cell\ ID\ mod\ N\ (6)$$

Cell ID is the identifier of the cell in which the terminal device is paged. If the time information of the paging moment includes the first offset PF_offset of the paging frame and the second offset PF_shift of the paging frame, the first offset PF_offset of the paging frame may be determined in an existing manner, and the second offset PF_shift of the paging frame may be determined by using the following formula (7):

$$PF\_shift = Cell\ ID\ mod\ N\ (7)$$

If the time information of the paging moment includes the offset PO_offset of the paging occasion, the offset PO_offset of the paging occasion may be determined by using the following formula (8):

$$PO\_offset = Cell\ ID\ mod\ Total\ quantity\ of\ POs\ (8)$$

As described above, the terminal device in this embodiment supports the enhanced paging calculation manner. Therefore, when determining that a network device corresponding to a cell on which the terminal device camps supports the foregoing enhanced paging moment paging function, the terminal device in this embodiment may also calculate, in the foregoing paging moment calculation manner, a paging moment for monitoring, and monitor a paging message at the paging moment. For example, the terminal device may determine, based on the time information of the paging moment, the monitoring moment of the paging message (that is, the paging moment at which the network device pages the terminal device). Further, the terminal device may monitor the paging message at the monitoring moment. It should be understood that if the terminal device determines that the network device corresponding to the cell on which the terminal device camps does not support the foregoing enhanced paging moment paging function, the terminal device may calculate, in the existing paging moment calculation manner, a paging moment for monitoring. Details are not described.

Optionally, the terminal device may determine, in the following two manners, that the network device corresponding to the cell on which the terminal device camps supports the foregoing enhanced paging moment paging function.

Manner 1: The terminal device may obtain the time information of the paging moment, and further determine, based on the time information of the paging moment, that the network device supports the enhanced paging moment paging function.

That is, the terminal device may identify, based on the time information of the paging moment of the cell, whether the cell on which the terminal device currently camps supports the enhanced paging moment paging function. If the time information of the paging moment of the cell includes the offset of the paging occasion and/or the offset of the paging frame; the first offset of the paging frame and the second offset of the paging frame; or the first offset of the paging frame, the second offset of the paging frame, and the offset of the paging occasion, the terminal device determines that the network device supports the enhanced paging moment paging function.

Optionally, the terminal device may receive the time information of the paging moment from the network device to which the cell on which the terminal device currently camps belongs. For example, the network device may broadcast the time information of the paging moment of the cell to the terminal device through a system message. Optionally, the terminal device may determine the time information of the paging moment based on the identifier of the cell in which the terminal device is paged. For a specific implementation, refer to the foregoing descriptions about the network device. Details are not described herein again.

Manner 2: The terminal device receives second indication information from the network device to which the cell on which the terminal device currently camps belongs, where the second indication information is used to enable the enhanced paging moment paging function. Then, the terminal device determines, based on the second indication information, that the network device to which the cell on which the terminal device currently camps belongs supports the enhanced paging moment paging function.

That is, when the cell on which the terminal device camps indicates, by using the second indication information, that the enhanced paging moment paging function is enabled in the cell, the terminal device may determine, based on the second indication information, that the network device to which the cell on which the terminal device currently camps belongs supports the enhanced paging moment paging function. For example, the network device may include the second indication information in a system message, to indicate to the terminal device that the enhanced paging moment paging function is enabled in the cell.

In this embodiment, it is assumed that the terminal device currently camps on a cell served by the first network device. Therefore, after monitoring a paging message sent by the first network device, the terminal device may access the first network device. After receiving an access message from the terminal device, the first network device may send the second message to the core network device, to indicate to the core network device that the terminal device accesses the first network device. An implementation in which the second message indicates that the terminal device accesses the first network device is not limited in this embodiment. For example, the second message may carry the identifier of the terminal device, to indicate that the terminal device accesses the first network device. The identifier of the terminal device may be any identifier that can represent the terminal device, for example, an ID of the terminal device, or an international mobile subscriber identity (international mobile subscriber identity, IMSI). For another example, the second message may indicate, by using one bit, that the terminal device accesses the first network device. For example, when a value of the bit is 1, it indicates that the terminal device accesses the first network device. Alternatively, when a value of the bit is 0, it indicates that the terminal device accesses the first network device.

The access message may be an RRC establishment request message sent by the terminal device to the first network device after the terminal device monitors the paging message sent by the first network device, or the access message may be an RRC connection establishment complete message sent by the terminal device to the first network device. In other words, the first network device may send the second message to the core network device when the terminal device monitors the paging message and then requests to establish an RRC connection to the first network device (that is, when the first network device receives an RRC connection establishment request initiated by the terminal device). Alternatively, the first network device may send the second message to the core network device after the terminal device monitors the paging message and establishes an RRC connection to the first network device. In this implementation, the second message may be a newly added message that is specifically used to indicate that the terminal device accesses the first network device, an initial user equipment (user equipment, UE) message that is sent by the first network device to the core network device after the first network device receives the RRC connection establishment complete message from the terminal device, or the like.

In this embodiment, after receiving the second message sent by the first network device, the core network device may send the third message to the second network device, to indicate the second network device to cancel paging the terminal device. If the paging moment determined by the second network device in the paging moment calculation manner does not arrive, that is, the second network device does not send a paging message to the terminal device, the second network device may cancel this paging.

In another possible implementation, after receiving the second message sent by the first network device, the core network device may determine whether the paging moment determined by the second network device for paging the terminal device is later than the paging moment determined by the first network device for paging the terminal device. If the paging moment determined by the second network device for paging the terminal device is later than the paging moment determined by the first network device for paging the terminal device, the core network device sends the third message to the second network device, to indicate the second network device to cancel paging the terminal device.

In another possible implementation, after receiving the second message sent by the first network device, the core network device may determine whether the paging moment determined by the second network device for paging the terminal device arrives. If the paging moment determined by the second network device for paging the terminal device does not arrive, the core network device sends the third message to the second network device, to indicate the second network device to cancel paging the terminal device.

In the foregoing manner, the terminal device is no longer paged in a cell in which the terminal device is not paged in the paging area, so that paging overheads of paging the terminal device can be reduced in the paging area.

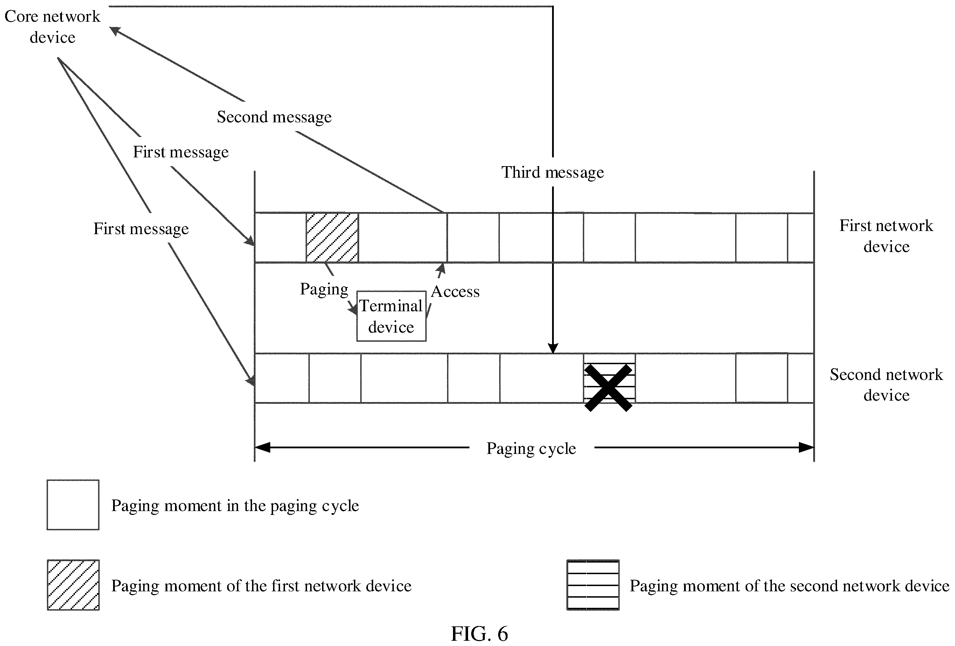

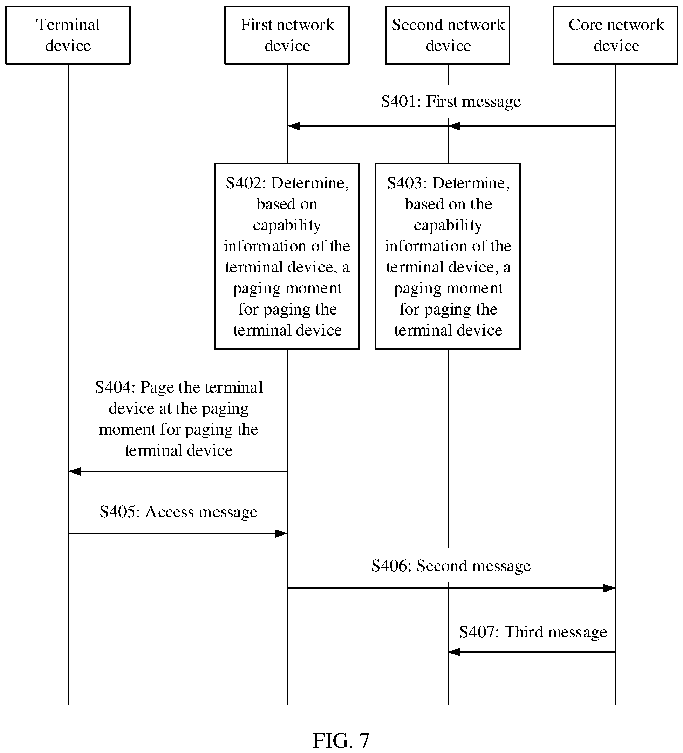

The following uses a specific example to schematically describe the method embodiment shown in FIG. 5. FIG. 6 is a schematic diagram 1 of a paging method according to an embodiment of this application. As shown in FIG. 6, in this example, a paging moment determined by a second network device for paging a terminal device is later than a paging moment determined by a first network device for paging the terminal device, and first indication information is capability information of the terminal device. FIG. 7 is a flowchart of another paging method according to an embodiment of this application. As shown in FIG. 7, the method includes the following steps.

S401: A core network device sends a first message to a first network device and a second network device.

The first message is used to indicate the first network device and the second network device to page a terminal device, and the first message includes capability information of the terminal device.

S402: The first network device determines, based on the capability information of the terminal device, a paging moment for paging the terminal device.

S403: The second network device determines, based on the capability information of the terminal device, a paging moment for paging the terminal device.

In this example, the paging moment determined by the first network device for paging the terminal device is later than the paging moment determined by the first network device for paging the terminal device.

It should be understood that S402 and S403 are performed in any sequence.

S404: The first network device pages the terminal device at the paging moment for paging the terminal device.

S405: The terminal device sends an access message to the first network device.

The access message may be, for example, an RRC connection request message, an RRC connection establishment complete message, or the like.

S406: The first network device sends a second message to the core network device.

The second message is used to indicate that the terminal device accesses the first network device.

The second message may be a newly added message that is specifically used to indicate that the terminal device accesses the first network device, or may be an initial user equipment (user equipment, UE) message, or the like.

S407: The core network device sends a third message to the second network device.

The third message is used to indicate the second network device to cancel paging the terminal device.

In this case, if a paging message of the second network device for the terminal device is not sent to the terminal device, the second network device cancels paging the terminal device based on the received third message.

In this way, paging the terminal device in an idle state in a paging area is completed.

According to the paging method provided in this embodiment of this application, paging moments for paging the terminal device in various cells are dispersed. In this way, after the terminal device accesses a cell, the terminal device may be no longer paged in another cell in which paging of the terminal device is not started. Therefore, paging overheads of paging the terminal device can be reduced in the paging area.

In the foregoing embodiment, in a scenario in which the paging moments for paging the terminal device in various cells in the paging area are dispersed, when the core network device needs to page the terminal device in the idle state, after the core network device sends the first message used to page the terminal device to various cells in the paging area, if the terminal device accesses the cell of the first network device, the core network device may indicate, by using the third message, another network device that does not page the terminal device to cancel paging the terminal device. Therefore, paging overheads of paging the terminal device can be reduced in the paging area. In this implementation, the core network device may send the first messages to all network devices in the paging area.

An embodiment of this application further provides another method for paging a terminal device in an idle state in a paging area. In the paging method, when a core network device needs to page the terminal device in the idle state, the core network device may send a first message to each network device one by one based on time information of a paging moment at which the network device in the paging area pages the terminal device. In this scenario, if the terminal device accesses a cell served by a network device, the core network device cancels the first message that is not sent to another network device in the paging area, so that the another network device in the paging area does not perform an operation of paging the terminal device, and paging overheads of paging the terminal device can be reduced in the paging area.

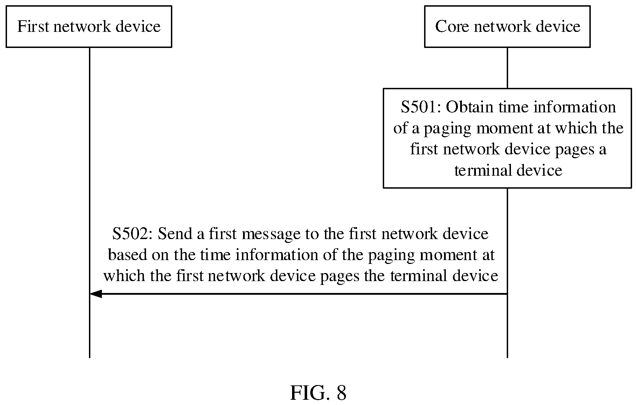

FIG. 8 is a flowchart of still another paging method according to an embodiment of this application. This embodiment relates to a specific process of paging a terminal device in an idle state in a paging area. As shown in FIG. 8, the method includes the following steps.

S501: A core network device obtains time information of a paging moment at which a first network device pages a terminal device.

S502: The core network device sends a first message to the first network device based on the time information of the paging moment at which the first network device pages the terminal device, where the first message is used to page the terminal device.

In this embodiment, when determining, in an enhanced paging moment calculation manner, a paging moment for paging the terminal device is supported in various cells in the paging area, the core network device may obtain time information of paging moments for paging the terminal device in various cells in the paging area. The core network device may learn of, based on the time information, the paging moments for paging the terminal device in various cells, and/or a paging moment time sequence for paging the terminal device in various cells. Further, the core network device may sequentially send, to a network device to which a cell in the paging area belongs, the first message used to page the terminal device, to page the terminal device. It should be understood that a manner in which the core network device sends the first message to the first network device based on the time information of the paging moment at which the first network device pages the terminal device is also applicable to a network device that does not support in determining, in the enhanced paging moment calculation manner, the paging moment for paging the terminal device. Details are not described again.

A manner in which the core network device obtains time information of a paging moment at which each network device in the paging area pages the terminal device is not limited in this embodiment. The first network device is used as an example. The core network device may receive the time information of the paging moment at which the first network device pages the terminal device reported by the first network device. Alternatively, the core network device may receive an index number that is of the time information of the paging moment and that is reported by the first network device, where there is a correspondence between the index number and the time information of the paging moment, and the correspondence may be preset in the core network device and the network device. Alternatively, the time information of the paging moment at which the first network device pages the terminal device is preconfigured on the core network device. It should be understood that, for a scenario in which the time information of the paging moment at which the first network device pages the terminal device is obtained through reporting of the first network device, a reporting scenario of the first network device is not limited in this embodiment. For example, when performing procedure interaction with the core network device, the first network device may report, to the core network device, the time information of the paging moment at which the first network device pages the terminal device or the index number. Alternatively, when receiving a time information obtaining request message sent by the core network device, the first network device may report, to the core network device, the time information of the paging moment at which the first network device pages the terminal device or the index number.

It should be understood that, for the time information of the paging moment in this embodiment, refer to the time information of the paging moment described in the embodiment shown in FIG. 5. To be specific, the time information of the paging moment may include an offset of a paging frame and/or an offset of a paging occasion; a first offset of a paging frame and a second offset of the paging frame; or a first offset of a paging frame, a second offset of the paging frame, and an offset of a paging occasion. Because the first offset of the paging frame and the second offset of the paging frame may be collectively referred to as an offset of the paging frame, in some embodiments, the time information of the paging moment may include the offset of the paging frame and/or the offset of the paging occasion.

The first network device and a second network device are still used as an example. Assuming that the paging moment determined by the first network device is earlier than a paging moment determined by the second network device, after obtaining the time information of the paging moment of the first network device and time information of the paging moment of the second network device, the core network device may first send the first message to the first network device before the paging moment at which the first network device pages the terminal device. Alternatively, the core network device first determines a paging moment time sequence based on the time information of the paging moment at which the first network device pages the terminal device and the time information of the paging moment at which the second network device pages the terminal device. In this example, the paging moment time sequence indicates that the paging moment of the first network device is earlier than the paging moment of the second network device, and in this case, the core network device may first send the first message to the first network device according to the paging moment time sequence. For descriptions of the first message, refer to the descriptions in the embodiment shown in FIG. 5.

Optionally, the core network device may send first indication information to the first network device, where the first indication information is used to indicate the first network device to determine, in the enhanced paging moment calculation manner, the paging moment for paging the terminal device. The first indication information is used, so that the first network device may learn that the terminal device also supports the enhanced paging moment calculation manner. In a possible implementation, the first indication information may be carried in the first message and sent to the first network device, or may be sent to the first network device through a message other than the first message. This is not limited. The enhanced paging moment calculation manner is used, so that paging moments for paging the terminal device that are determined for various cells in the paging area may be dispersed in different paging frames of a paging cycle, and are not be concentrated in a same paging frame. In other words, the terminal device may be paged at different moments in different cells in the paging area. It should be understood that when a quantity of paging frames included in the paging cycle is less than a quantity of cells in the paging area, paging moments for paging the terminal device that are determined for some cells may be the same.

Optionally, the core network device may obtain capability information of the terminal device before performing the method embodiment shown in FIG. 8. The capability information is used to indicate that the terminal device supports the enhanced paging moment calculation manner. In a possible implementation, the core network device may receive the capability information of the terminal device from the terminal device or the core network device. For example, when the terminal device performs a registration procedure, a path switch procedure, a location update procedure, or the like, the core network device may receive the capability information of the terminal device from the terminal device. In this scenario, in a possible implementation, the first indication information may be the capability information of the terminal device.

In this embodiment, after receiving the first message, the first network device may determine, in the manner in the embodiment shown in FIG. 5, the paging moment at which the first network device pages the terminal device, and page the terminal device at the paging moment. If the terminal device currently camps on a cell served by the first network device, the terminal device may access the first network device after monitoring a paging message of the first network device. Correspondingly, after receiving an access message indicating that the terminal device accesses the first network device, the first network device may send a second message to the core network device, to indicate that the terminal device accesses the first network device. If the terminal device currently does not camp on a cell served by the first network device, although the first network device sends the paging message, the first network device does not receive the access message of the terminal device (that is, the first network device cannot page the terminal device). For descriptions of the second message and how the first network device and the terminal device determine the paging moment for paging the terminal device, refer to the foregoing embodiments. Details are not described herein again.

In this implementation, the core network device determines, in the following manner, whether to send the first message for paging the terminal device to the second network device.

Before the core network device does not send the first message to the second network device based on the time information of the paging moment at which the second network device pages the terminal device, the core network device may determine whether the terminal device accesses the first network device. Further, the core network device determines, based on whether the terminal device accesses the first network device, whether to send the first message to the second network device. Specifically, if the core network device receives the second message from the first network device, the core network device cancels sending the first message to the second network device. If the core network device does not receive the second message from the first network device, the core network device sends the first message to the second network device based on the time information of the paging moment at which the second network device pages the terminal device. In this example, the core network device may send the first indication information to the second network device, where the first indication information is used to indicate the second network device to determine, in the enhanced paging moment calculation manner, the paging moment for paging the terminal device. In a possible implementation, the first indication information may be carried in the first message and sent to the second network device, or may be sent to the second network device through a message other than the first message. This is not limited.

In the foregoing manner, the terminal device is no longer paged in a cell in which the terminal device is not paged in the paging area, so that paging overheads of paging the terminal device can be reduced in the paging area.

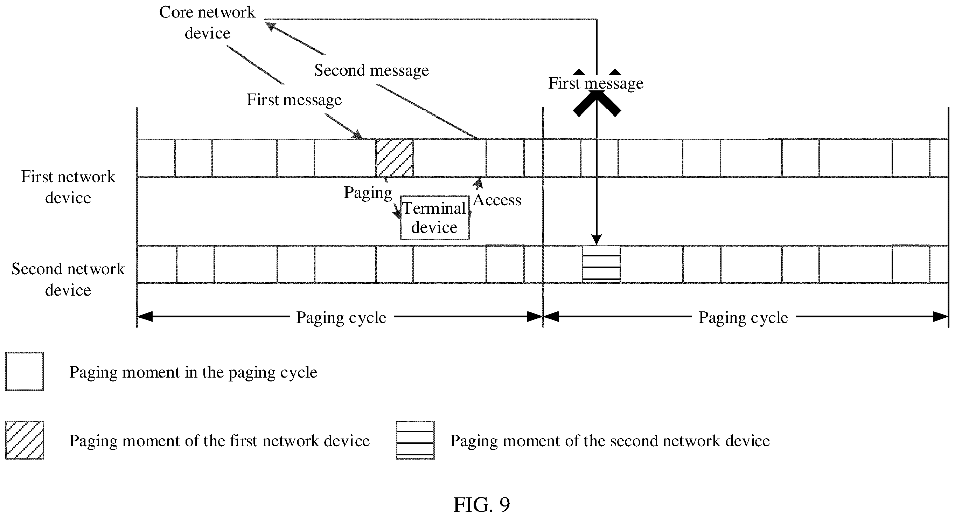

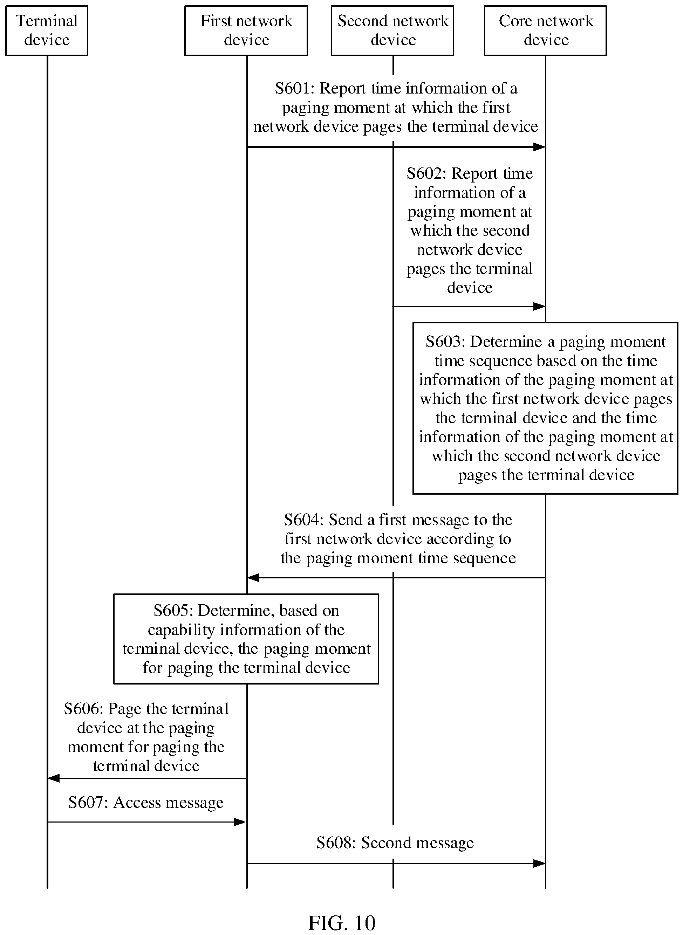

The following uses a specific example to schematically describe the method embodiment shown in FIG. 8. FIG. 9 is a schematic diagram 2 of a paging method according to an embodiment of this application. As shown in FIG. 9, in this example, a first network device and a second network device report, to a core network device, time information of a paging moment at which each network device pages a terminal device, a paging moment determined by the second network device for paging the terminal device is later than a paging moment determined by the first network device for paging the terminal device, and first indication information is capability information of the terminal device. FIG. 10 is a flowchart of still another paging method according to an embodiment of this application. As shown in FIG. 10, the method includes the following steps.

S601: A first network device reports, to a core network device, time information of a paging moment at which the first network device pages a terminal device.

S602: A second network device reports, to the core network device, time information of a paging moment at which the second network device pages the terminal device.

It should be understood that S601 and S602 are performed in any sequence.

S603: The core network device determines a paging moment time sequence based on the time information of the paging moment at which the first network device pages the terminal device and the time information of the paging moment at which the second network device pages the terminal device.

The paging moment time sequence indicates that the paging moment of the first network device is earlier than the paging moment of the second network device.

S604: The core network device sends a first message to the first network device according to the paging moment time sequence.

The first message is used to indicate to page the terminal device, and the first message includes capability information of the terminal device.

Optionally, the foregoing steps S603 and S604 may be replaced as follows:

S604': The core network device sends a first message to the first network device before the paging moment of the first network device.

S605: The first network device determines, based on the capability information of the terminal device, the paging moment for paging the terminal device.

S606: The first network device pages the terminal device at the paging moment for paging the terminal device.

S607: The terminal device sends an access message to the first network device.

The access message may be, for example, an RRC connection request message, an RRC connection establishment complete message, or the like.

S608: The first network device sends a second message to the core network device.

The second message is used to indicate that the terminal device accesses the first network device.

The second message may be a newly added message that is specifically used to indicate that the terminal device accesses the first network device, or may be an initial user equipment (user equipment, UE) message, or the like.

In this case, if the core network device does not send the first message to the second network device, the core network device cancels sending the first message to the second network device, to prevent the second network device from performing an operation of paging the terminal device. To be specific, when the core network device sends a first message to each network device one by one according to the paging moment time sequence, if the core network receives a second message indicating that the terminal device accesses a network device, for a network device to which the first message is not sent in the paging moment time sequence, the core network device no longer perform an action of sending the first message to the network device, to prevent the network device from paging the terminal device.

In this way, paging the terminal device in an idle state in a paging area is completed.

According to the paging method provided in this embodiment of this application, paging moments for paging the terminal device in various cells are dispersed. In this way, after the terminal device accesses a cell, the core network device may stop sending a paging message to another cell in which paging of the terminal device is not started. Therefore, the terminal device is not paged in these cells, and paging overheads of paging the terminal device can be reduced in the paging area. In other words, according to the method in this embodiment, paging overheads of paging the terminal device are reduced on an air interface side, and overheads of sending, by the core network device to the network device in the paging area, the first message used to page the terminal device are reduced.

The foregoing embodiments describe how to page a terminal device in an idle state. The following describes how to page a terminal device in an inactive state. In the following embodiments of paging the terminal device in the inactive state, concepts that are the same as or similar to those in the foregoing embodiments of paging the terminal device in the idle state are not described again.

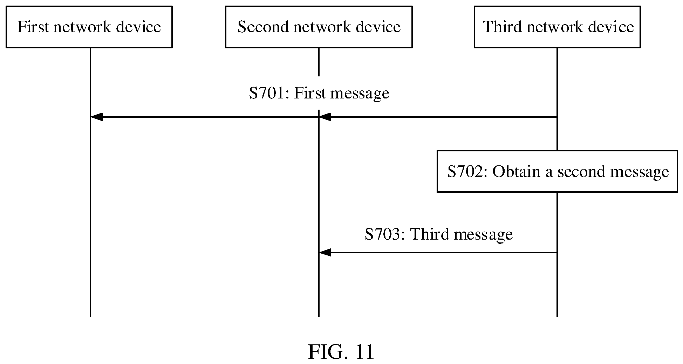

FIG. 11 is a flowchart of still another paging method according to an embodiment of this application. This embodiment relates to a specific process in which a third network device pages a terminal device in an inactive state in a paging area. The third network device herein is a network device that stores a terminal connection context, that is, a last network device serving the terminal device before the terminal device enters the inactive state. As shown in FIG. 11, the method includes the following steps.

S701: The third network device sends a first message to the first network device and the second network device.

The first message is used to indicate the first network device and the second network device to page the terminal device, the first message includes first indication information, and the first indication information is used to indicate a manner of calculating paging moments at which the first network device and the second network device page the terminal device.

S702: The third network device obtains a second message.

The second message is used to indicate that the terminal device accesses the first network device or accesses the third network device.

S703: The third network device sends a third message to the second network device.

The third message is used to indicate the second network device to cancel paging the terminal device. Optionally, if a paging message to be sent by the third network device to the terminal device is not sent to the terminal device, the third message may also be used to cancel paging of the terminal device by the third network device.

In this embodiment, when the third network device receives downlink data or downlink signaling of the terminal device delivered by a core network device, the third network device may trigger, by sending the first message to the first network device and the second network device in the paging area, the first network device and the second network device to page the terminal device. In some embodiments, the first message may also be referred to as a paging message. Optionally, the first message may carry at least one of an identifier of the terminal device, a DRX cycle, paging area information, and the like. It should be understood that the paging area information herein may include information about a cell in which the terminal device needs to be paged this time. For example, the paging area information may be information about a group of cells, or may be information about an RNA area of the terminal device, and each RNA area includes at least one cell.

Different from a paging message in a conventional technology, the first message in this embodiment includes the first indication information, and the first indication information is used to indicate the manner of calculating the paging moments at which the first network device and the second network device page the terminal device. The manner of calculating the paging moments is the foregoing enhanced paging moment calculation manner. The enhanced paging moment calculation manner is used, so that paging moments for paging the terminal device that are determined for various cells in the paging area may be dispersed in different paging frames of a paging cycle, and are not be concentrated in a same paging frame. In other words, the terminal device may be paged at different moments in different cells in the paging area. It should be understood that when a quantity of paging frames included in the paging cycle is less than a quantity of cells in the paging area, paging moments for paging the terminal device that are determined for some cells may be the same.

It should be understood that the first indication information may be carried in the first message and sent to the first network device and the second network device, or may be sent to the first network device and the second network device through a message other than the first message. FIG. 11 is a schematic diagram of a paging procedure in which an example in which the first indication information is carried in the first message is used.

Optionally, the third network device may obtain capability information of the terminal device before performing the method embodiment shown in FIG. 11. The capability information is used to indicate that the terminal device supports the enhanced paging moment calculation manner. In a possible implementation, the third network device may receive the capability information of the terminal device from the core network device, the third network device may receive the capability information of the terminal device from another network device (for example, a network device previously accessed by the terminal device), or the third network device may receive the capability information of the terminal device from the terminal device. For example, when the terminal device performs a capability reporting procedure, a handover procedure, a registration procedure, a path switch procedure, a location update procedure, or the like, the third network device may receive the capability information of the terminal device from the terminal device. In this scenario, in a possible implementation, the first indication information may be the capability information of the terminal device.

In this embodiment, after the first network device and the second network device receive the first message sent by the third network device, if the first network device and the second network device support the paging moment calculation manner indicated by the first indication information, the first network device and the second network device may determine, in the calculation manner described in the embodiment shown in FIG. 5, the paging moments at which the first network device and the second network device page the terminal device, and page the terminal device at the paging moments by using paging messages. Correspondingly, if the third network device supports the enhanced paging moment calculation manner, the third network device may also determine, in the calculation manner described in the embodiment shown in FIG. 5, a paging moment at which the third network device pages the terminal device, and page the terminal device at the paging moment by using a paging message. It should be understood that if the first network device, the second network device, or the third network device does not support the enhanced paging moment calculation manner, the first network device, the second network device, or the third network device may determine, in an existing paging moment calculation manner, the paging moment at which the first network device, the second network device, or the third network device pages the terminal device. Details are not described.

As described above, the terminal device in this embodiment supports the enhanced paging calculation manner. Therefore, when determining that a network device corresponding to a cell on which the terminal device camps supports the foregoing enhanced paging moment paging function, the terminal device in this embodiment may also calculate, in the foregoing enhanced paging moment calculation manner, a paging moment for monitoring, and monitor a paging message at the paging moment. It should be understood that if the terminal device determines that the network device corresponding to the cell on which the terminal device camps does not support the foregoing enhanced paging moment paging function, the terminal device may calculate, in the existing paging moment calculation manner, a paging moment for monitoring. Details are not described.

In this embodiment, based on different cells on which the terminal device currently camps, cases in which the third network device obtains the second message may include the following two cases:

Case 1: The terminal device currently camps on a cell served by the first network device, and the third network device obtains the second message by receiving the second message from the first network device.

In this scenario, the terminal device may access the first network device after monitoring a paging message sent by the first network device. After receiving an access message from the terminal device, the first network device may send the second message to the third network device, to indicate to the third network device that the terminal device accesses the first network device. An implementation in which the second message indicates that the terminal device accesses the first network device is not limited in this embodiment. For example, the second message may carry the identifier of the terminal device, to indicate that the terminal device accesses the first network device. The identifier of the terminal device may be any identifier that can represent the terminal device, for example, an ID of the terminal device, an inactive radio network temporary identifier (inactive radio network temporary identifier, I-RNTI), or an international mobile subscriber identity (international mobile subscriber identity, IMSI). For another example, the second message may indicate, by using one bit, that the terminal device accesses the first network device. For example, when a value of the bit is 1, it indicates that the terminal device accesses the first network device. Alternatively, when a value of the bit is 0, it indicates that the terminal device accesses the first network device.

The access message may be an RRC connection resume request message sent by the terminal device to the first network device after the terminal device monitors the paging message sent by the first network device. In other words, the first network device may send the second message to the third network device when the terminal device monitors the paging message and then requests to resume an RRC connection to the first network device. In this implementation, the second message may be a newly added message that is specifically used to indicate that the terminal device accesses the first network device, a user equipment context obtaining message sent by the first network device to the third network device after the first network device receives the RRC connection resume request message from the terminal device, or the like.

In this embodiment, after receiving the second message sent by the first network device, the third network device may send the third message to the second network device, to indicate the second network device to cancel paging the terminal device. If the paging moment determined by the second network device in the paging moment calculation manner does not arrive, that is, the second network device does not send a paging message to the terminal device, the second network device may cancel this paging.

In another possible implementation, after receiving the second message sent by the first network device, the third network device may determine whether the paging moment determined by the second network device for paging the terminal device is later than the paging moment determined by the first network device for paging the terminal device. If the paging moment determined by the second network device for paging the terminal device is later than the paging moment determined by the first network device for paging the terminal device, the third network device sends the second message to the second network device, to indicate the second network device to cancel paging the terminal device.

In another possible implementation, after receiving the second message sent by the first network device, the third network device may determine whether the paging moment determined by the second network device for paging the terminal device arrives. If the paging moment determined by the second network device for paging the terminal device does not arrive, the third network device sends the second message to the second network device, to indicate the second network device to cancel paging the terminal device.

Correspondingly, if the paging moment, determined by the third network device in the manner of calculating the paging moment at which the third network device pages the terminal device, at which the third network device pages the terminal device is later than a moment at which the third network device receives the second message, the third network device stops paging the terminal device.

Case 2: The terminal device currently camps on a cell served by the third network device, and the third network device obtains the second message by receiving the second message from the terminal device.

In this scenario, the terminal device may access the third network device after monitoring a paging message sent by the third network device. In this case, the third network device may receive the second message from the terminal device, to indicate to the third network device that the terminal device accesses the third network device. For example, the second message may be an RRC establishment request message or an RRC resume request message sent by the terminal device to the third network device after the terminal device monitors a paging message sent by the first network device, or the second message may be an RRC connection establishment complete message, an RRC connection resume complete message, or the like sent by the terminal device to the third network device.

An implementation in which the second message indicates that the terminal device accesses the third network device is not limited in this embodiment. For example, the second message may carry the identifier of the terminal device, to indicate that the terminal device accesses the third network device. The identifier of the terminal device may be any identifier that can represent the terminal device, for example, an ID of the terminal device, or an international mobile subscriber identity (international mobile subscriber identity, IMSI). For another example, the second message may indicate, by using one bit, that the terminal device accesses the third network device. For example, when a value of the bit is 1, it indicates that the terminal device accesses the first network device. Alternatively, when a value of the bit is 0, it indicates that the terminal device accesses the first network device.

In this embodiment, after receiving the second message sent by the terminal device, the third network device may send the third message to the first network device and the second network device, to indicate the first network device and the second network device to cancel paging the terminal device. If the paging moments/moment determined by the first network device and/or the second network device in the paging moment calculation manner do/does not arrive, that is, the first network device and/or the second network device do/does not send the paging message to the terminal device, the first network device and/or the second network device may cancel this paging.

In another possible implementation, after receiving the second message sent by the terminal device, the third network device may determine whether the paging moments determined by the first network device and the second network device for paging the terminal device are later than the paging moment determined by the first network device for paging the terminal device. If the paging moments/moment determined by the first network device and/or the second network device for paging the terminal device are/is later than the paging moment determined by the first network device for paging the terminal device, the third network device sends the second message to a network device (that is, the first network device and/or the second network device) whose paging moment is later than the paging moment determined by the first network device for paging the terminal device, to indicate the network device to cancel paging the terminal device.

In another possible implementation, after receiving the second message sent by the terminal device, the third network device may determine whether the paging moments determined by the first network device and the second network device for paging the terminal device arrives. If the paging moments/moment determined by the first network device and/or the second network device for paging the terminal device do/does not arrive, the third network device sends the second message to a network device (that is, the first network device and/or the second network device) whose paging moment for paging the terminal device does not arrive, to indicate the network device to cancel paging the terminal device.

In the foregoing manner, the terminal device is no longer paged in a cell in which the terminal device is not paged in the paging area, so that paging overheads of paging the terminal device can be reduced in the paging area.

The following uses two specific examples to schematically describe the method embodiment shown in FIG. 11.

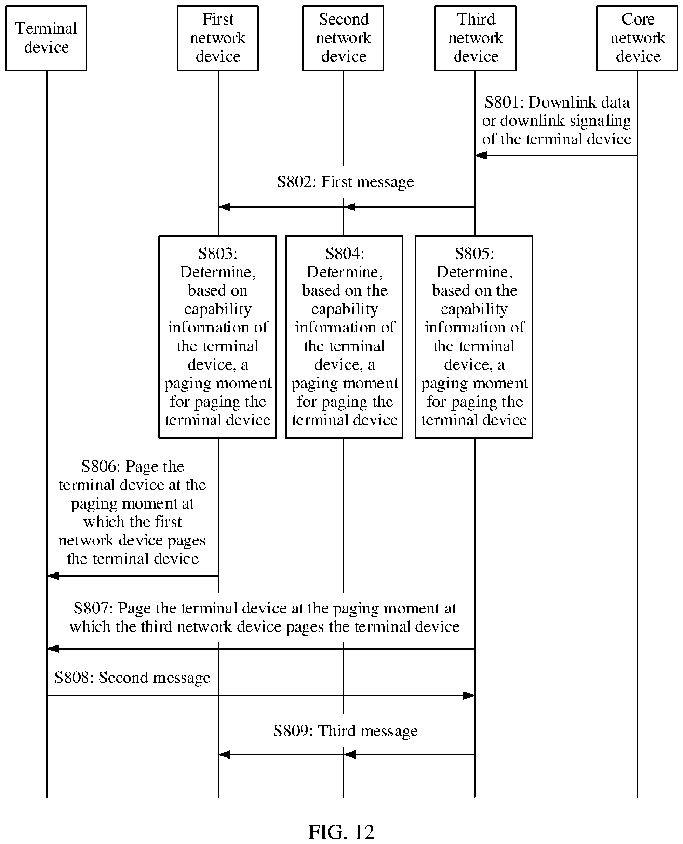

FIG. 12 is a flowchart of still another paging method according to an embodiment of this application. In this example, it is assumed that a terminal device currently camps on a cell served by a third network device. A paging moment determined by a second network device for paging the terminal device is later than a paging moment determined by the third network device for paging the terminal device. A paging moment determined by a first network device for paging the terminal device is earlier than the paging moment determined by the third network device for paging the terminal device. First indication information is capability information of the terminal device. As shown in FIG. 12, the method includes the following steps.

S801: A core network device sends downlink data or downlink signaling of the terminal device to the third network device.

S802: The third network device sends a first message to the first network device and the second network device.

The first message is used to indicate the first network device and the second network device to page the terminal device, and the first message includes the capability information of the terminal device.

S803: The first network device determines, based on the capability information of the terminal device, the paging moment for paging the terminal device.

S804: The second network device determines, based on the capability information of the terminal device, the paging moment for paging the terminal device.

It should be understood that S803 and S804 are performed in any sequence.

S805: The third network device determines, based on the capability information of the terminal device, the paging moment for paging the terminal device.

It should be understood that S805 may be performed at any moment after S801.

S806: The first network device pages the terminal device at the paging moment at which the first network device pages the terminal device.

S807: The third network device pages the terminal device at the paging moment at which the third network device pages the terminal device.

S808: The terminal device sends a second message to the third network device.

The second message is used to indicate that the terminal device accesses the third network device. In this example, the second message may be, for example, an RRC connection resume request message.

S809: The third network device sends a third message to the second network device and the first network device.

The third message is used to indicate the second network device to cancel paging the terminal device.

In this case, if a paging message of the second network device for the terminal device is not sent to the terminal device, the second network device may cancel paging the terminal device based on the received third message. However, because a paging message of the first network device for the terminal device has been sent to the terminal device, the first network device may perform no processing on the third message.

In this way, paging the terminal device in an inactive state in a paging area is completed.

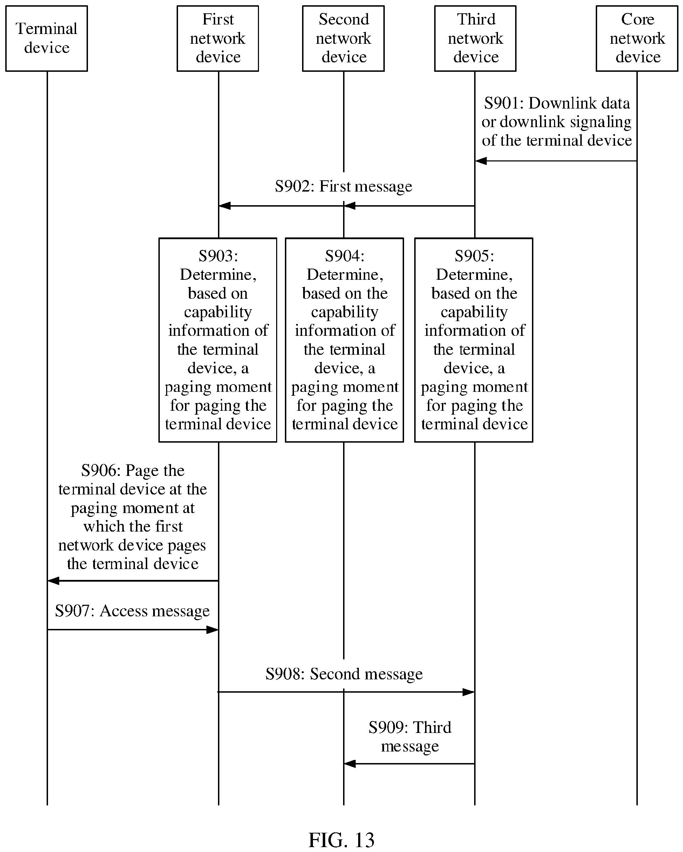

FIG. 13 is a flowchart of still another paging method according to an embodiment of this application. In this example, it is assumed that a terminal device currently camps on a cell served by a first network device. A paging moment determined by a second network device for paging the terminal device is later than a paging moment determined by the first network device for paging the terminal device. A paging moment at which a third network device pages the terminal device is later than a moment at which the third network device receives a second message. First indication information is capability information of the terminal device. As shown in FIG. 13, the method includes the following steps.

S901: A core network device sends downlink data or downlink signaling of the terminal device to the third network device.

S902: The third network device sends a first message to the first network device and the second network device.

The first message is used to indicate the first network device and the second network device to page the terminal device, and the first message includes the capability information of the terminal device.

S903: The first network device determines, based on the capability information of the terminal device, the paging moment for paging the terminal device.

S904: The second network device determines, based on the capability information of the terminal device, the paging moment for paging the terminal device.

It should be understood that S903 and S904 are performed in any sequence.

S905: The third network device determines, based on the capability information of the terminal device, the paging moment for paging the terminal device.

It should be understood that S905 may be performed at any moment after S901.

S905: The third network device determines, based on the capability information of the terminal device, the paging moment for paging the terminal device.

It should be understood that S903 to S905 are performed in any sequence.

S906: The first network device pages the terminal device at the paging moment at which the first network device pages the terminal device.

S907: The terminal device sends an access message to the first network device.

The access message may be, for example, an RRC connection resume request message.

S908: The first network device sends the second message to the third network device.

The second message is used to indicate that the terminal device accesses the first network device. The second message may be, for example, a user equipment context obtaining message.

S909: The third network device sends a third message to the second network device.

The third message is used to indicate the second network device to cancel paging the terminal device.

Because a paging message of the second network device for the terminal device is not sent to the terminal device, the second network device cancels paging the terminal device based on the received third message. Correspondingly, because the paging moment at which the third network device pages the terminal device is later than the moment at which the third network device receives the second message, the third network device also stops paging the terminal device.

In this way, paging the terminal device in an inactive state in a paging area is completed.

According to the paging method provided in this embodiment of this application, paging moments for paging the terminal device in various cells are dispersed. In this way, after the terminal device accesses a cell, the terminal device may be no longer paged in another cell in which paging of the terminal device is not started. Therefore, paging overheads of paging the terminal device can be reduced in the paging area.

In the foregoing embodiment, in a scenario in which the paging moments for paging the terminal device in various cells in the paging area are dispersed, when the third network device needs to page the terminal device in the inactive state, after the third network device sends the first message used to page the terminal device to various cells in the paging area, if the terminal device accesses a cell of a network device, the third network device may indicate another network device that does not page the terminal device to cancel paging the terminal device. Therefore, paging overheads of paging the terminal device can be reduced in the paging area. In this implementation, the third network device may send the first messages to all network devices in the paging area.

An embodiment of this application further provides another method for paging a terminal device in an inactive state in a paging area. In the paging method, when a third network device needs to page the terminal device in the inactive state, the third network device may send a first message to each network device one by one based on time information of a paging moment at which the network device in the paging area pages the terminal device. In this scenario, if the terminal device accesses a cell served by a network device, the third network device cancels the first message that is not sent to another network device in the paging area, so that the another network device in the paging area does not perform an operation of paging the terminal device, and paging overheads of paging the terminal device can be reduced in the paging area.

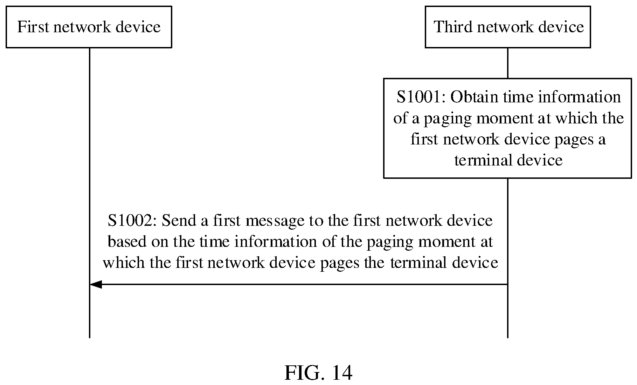

FIG. 14 is a flowchart of still another paging method according to an embodiment of this application. This embodiment relates to a specific process of paging a terminal device in an inactive state in a paging area. As shown in FIG. 14, the method includes the following steps.

S1001: A third network device obtains time information of a paging moment at which a first network device pages the terminal device.

S1002: The third network device sends a first message to the first network device based on the time information of the paging moment at which the first network device pages the terminal device, where the first message is used to page the terminal device.

In this embodiment, when determining, in an enhanced paging moment calculation manner, a paging moment for paging the terminal device is supported in various cells in the paging area, the third network device may obtain time information of paging moments for paging the terminal device in various cells in the paging area. The third network device may learn of, based on the time information, the paging moments for paging the terminal device in various cells, and/or a paging moment time sequence for paging the terminal device in various cells. Further, when the third network device receives downlink data or downlink signaling of the terminal device delivered by a core network device, the third network device may sequentially send, to a network device to which a cell in the paging area belongs, the first message used to page the terminal device, to page the terminal device. It should be understood that a manner in which the third network device sends the first message to the first network device based on the time information of the paging moment at which the first network device pages the terminal device is also applicable to a network device that does not support in determining, in the enhanced paging moment calculation manner, the paging moment for paging the terminal device. Details are not described again.

A manner in which the third network device obtains time information of a paging moment at which each network device in the paging area pages the terminal device is not limited in this embodiment. The first network device is used as an example. The third network device may receive, from the core network device, the time information of the paging moment at which the first network device pages the terminal device. Alternatively, the third network device may receive an index number of the time information of the paging moment from the core network device, where there is a correspondence between the index number and the time information of the paging moment, and the correspondence may be preset in the third network device and the core network device. Alternatively, the time information of the paging moment at which the first network device pages the terminal device or an index number is preconfigured on the third network device. It should be understood that, for a scenario in which the time information of the paging moment at which the first network device pages the terminal device is obtained from the core network device, an implementation is not limited in this embodiment. For example, when performing procedure interaction with the third network device, the core network device may send, to the third network device, the time information of the paging moment at which the first network device pages the terminal device or the index number. Alternatively, when receiving a time information obtaining request message sent by the third network device, the core network device may send, to the third network device, the time information of the paging moment at which the first network device pages the terminal device or the index number.

It should be understood that, for the time information of the paging moment in this embodiment, refer to the time information of the paging moment described in the embodiment shown in FIG. 5. To be specific, the time information of the paging moment may include an offset of a paging frame and/or an offset of a paging occasion; a first offset of a paging frame and a second offset of the paging frame; or a first offset of a paging frame, a second offset of the paging frame, and an offset of a paging occasion. Because the first offset of the paging frame and the second offset of the paging frame may be collectively referred to as an offset of the paging frame, in some embodiments, the time information of the paging moment may include the offset of the paging frame and/or the offset of the paging occasion.

The first network device and a second network device are still used as an example. Assuming that the paging moment determined by the first network device is earlier than a paging moment determined by the second network device, after obtaining the time information of the paging moment of the first network device and time information of the paging moment of the second network device, the third network device may first send the first message to the first network device before the paging moment at which the first network device pages the terminal device. Alternatively, the third network device first determines a paging moment time sequence based on the time information of the paging moment at which the first network device pages the terminal device and the time information of the paging moment at which the second network device pages the terminal device. In this example, the paging moment time sequence indicates that the paging moment of the first network device is earlier than the paging moment of the second network device, and in this case, the third network device may first send the first message to the first network device according to the paging moment time sequence. For descriptions of the first message, refer to the descriptions in the embodiment shown in FIG. 5.

Optionally, the third network device may send first indication information to the first network device, where the first indication information is used to indicate the first network device to determine, in the enhanced paging moment calculation manner, the paging moment for paging the terminal device. The first indication information is used, so that the first network device may learn that the terminal device also supports the enhanced paging moment calculation manner. In a possible implementation, the first indication information may be carried in the first message and sent to the first network device, or may be sent to the first network device through a message other than the first message. This is not limited. The enhanced paging moment calculation manner is used, so that paging moments for paging the terminal device that are determined for various cells in the paging area may be dispersed in different paging frames of a paging cycle, and are not be concentrated in a same paging frame. In other words, the terminal device may be paged at different moments in different cells in the paging area. It should be understood that when a quantity of paging frames included in the paging cycle is less than a quantity of cells in the paging area, paging moments for paging the terminal device that are determined for some cells may be the same.

Optionally, the third network device may obtain capability information of the terminal device before performing the method embodiment shown in FIG. 14. The capability information is used to indicate that the terminal device supports the enhanced paging moment calculation manner. In a possible implementation, the third network device may receive the capability information of the terminal device from the terminal device or the core network device, or the third network device may receive the capability information of the terminal device from another network device (for example, a network device previously accessed by the terminal device). For example, when the terminal device performs a capability reporting procedure, a handover procedure, a registration procedure, a path switch procedure, a location update procedure, or the like, the third network device may receive the capability information of the terminal device from the terminal device. In this scenario, in a possible implementation, the first indication information may be the capability information of the terminal device.

In this embodiment, after receiving the first message, the first network device may determine, in the manner in the embodiment shown in FIG. 5, the paging moment at which the first network device pages the terminal device, and page the terminal device at the paging moment. Correspondingly, if the third network device supports the enhanced paging moment calculation manner, the third network device may also determine, in the calculation manner described in the embodiment shown in FIG. 5, a paging moment at which the third network device pages the terminal device, and page the terminal device at the paging moment by using a paging message. It should be understood that if the first network device or the third network device does not support the enhanced paging moment calculation manner, the first network device or the third network device may determine, in an existing paging moment calculation manner, the paging moment at which the first network device or the third network device pages the terminal device. Details are not described.

As described above, the terminal device in this embodiment supports the enhanced paging calculation manner. Therefore, when determining that a network device corresponding to a cell on which the terminal device camps supports the foregoing enhanced paging moment paging function, the terminal device in this embodiment may also calculate, in the foregoing enhanced paging moment calculation manner, a paging moment for monitoring, and monitor a paging message at the paging moment. It should be understood that if the terminal device determines that the network device corresponding to the cell on which the terminal device camps does not support the foregoing enhanced paging moment paging function, the terminal device may calculate, in the existing paging moment calculation manner, a paging moment for monitoring. Details are not described.

In this embodiment, if the terminal device currently camps on a cell served by the first network device, the terminal device may access the first network device after monitoring a paging message of the first network device. Correspondingly, after receiving an access message indicating that the terminal device accesses the first network device, the first network device may send a second message to the third network device, to indicate that the terminal device accesses the first network device. If the terminal device currently does not camp on a cell served by the first network device, although the first network device sends the paging message, the first network device does not receive the access message of the terminal device (that is, the first network device cannot page the terminal device). For how the first network device and the terminal device determine the paging moment for paging the terminal device, refer to the foregoing embodiments. Details are not described herein again.

An implementation in which the second message indicates that the terminal device accesses the first network device is not limited in this embodiment. For example, the second message may carry an identifier of the terminal device, to indicate that the terminal device accesses the first network device. The identifier of the terminal device may be any identifier that can represent the terminal device, for example, an ID of the terminal device, an inactive radio network temporary identifier (inactive radio network temporary identifier, I-RNTI), or an international mobile subscriber identity (international mobile subscriber identity, IMSI). For another example, the second message may indicate, by using one bit, that the terminal device accesses the first network device. For example, when a value of the bit is 1, it indicates that the terminal device accesses the first network device. Alternatively, when a value of the bit is 0, it indicates that the terminal device accesses the first network device.

The access message may be an RRC connection resume request message sent by the terminal device to the first network device after the terminal device monitors the paging message sent by the first network device. In other words, the first network device may send the second message to the third network device when the terminal device monitors the paging message and then requests to resume an RRC connection to the first network device. In this implementation, the second message may be a newly added message that is specifically used to indicate that the terminal device accesses the first network device, a user equipment context obtaining message sent by the first network device to the third network device after the first network device receives the RRC connection resume request message from the terminal device, or the like.

In this implementation, assuming that the paging moment determined by the first network device is earlier than the paging moment determined by the second network device, the third network device determines, in the following manner, whether to send the first message used to page the terminal device to the second network device.

Before the third network device does not send the first message to the second network device based on the time information of the paging moment at which the second network device pages the terminal device, the third network device may determine whether the terminal device accesses the first network device. Further, the third network device determines, based on whether the terminal device accesses the first network device, whether to send the first message to the second network device. Specifically, if the third network device receives the second message from the first network device, the third network device cancels sending the first message to the second network device. If the third network device does not receive the second message from the first network device, the third network device sends the first message to the second network device based on the time information of the paging moment at which the second network device pages the terminal device. In this example, the third network device may send the first indication information to the second network device, where the first indication information is used to indicate the second network device to determine, in the enhanced paging moment calculation manner, the paging moment for paging the terminal device. In a possible implementation, the first indication information may be carried in the first message and sent to the second network device, or may be sent to the second network device through a message other than the first message. This is not limited.

Correspondingly, the third network device may determine, in the following manner, whether to send the first message used to page the terminal device to the second network device.

Before the third network device does not page the terminal device based on time information of a paging moment at which the third network device pages the terminal device, the third network device may determine whether the terminal device accesses the first network device. Further, the third network device determines, based on whether the terminal device accesses the first network device, whether to page the terminal device. Specifically, if the third network device receives the second message from the first network device, the third network device cancels paging the terminal device. Alternatively, if the third network device does not receive the second message from the first network device, the third network device pages the terminal device based on the time information of the paging moment at which the third network device pages the terminal device.

It should be noted that if the paging moment determined, based on the obtained time information of the paging moment at which the third network device pages the terminal device, by the third network device for paging the terminal device is earlier than the paging moments determined by the first network device and the second network device for paging the terminal device, before sending the first message to the first network device and the second network device, the third network device needs to determine, based on whether the terminal device accesses the third network device, whether to send the first message to the first network device and the second network device.

In the foregoing manner, the terminal device is no longer paged in a cell in which the terminal device is not paged in the paging area, so that paging overheads of paging the terminal device can be reduced in the paging area.

The following uses two specific examples to schematically describe the method embodiment shown in FIG. 14.

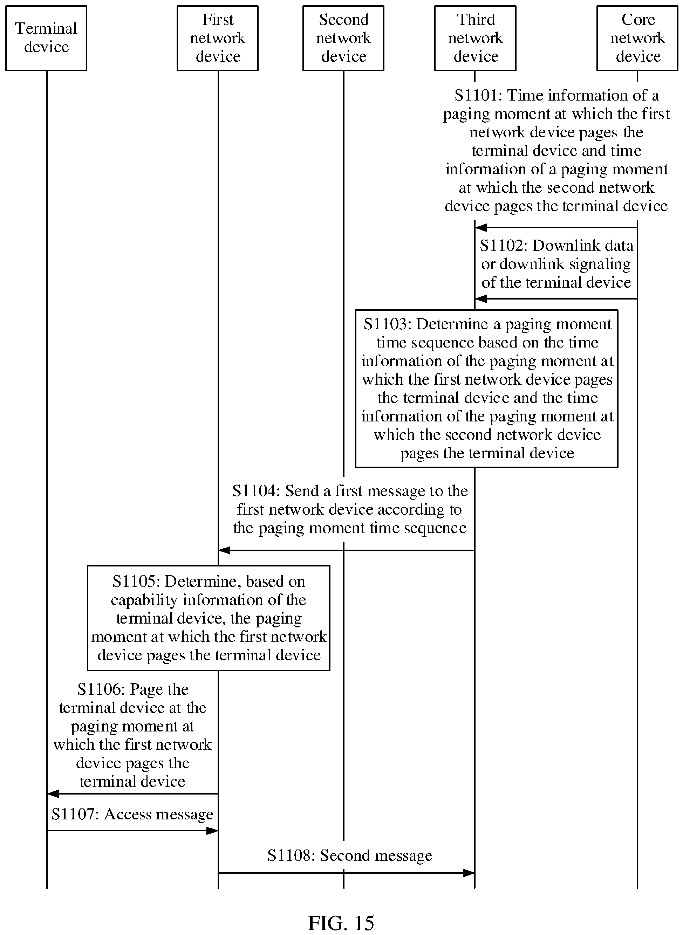

FIG. 15 is a flowchart of still another paging method according to an embodiment of this application. In this example, it is assumed that a terminal device currently camps on a cell served by a first network device. A paging moment determined by a second network device for paging the terminal device is later than a paging moment determined by the first network device for paging the terminal device. A paging moment determined by a third network device for paging the terminal device is later than a moment at which the third network device receives a second message. First indication information is capability information of the terminal device. As shown in FIG. 15, the method includes the following steps.

S1101: A core network device sends, to the third network device, time information of the paging moment at which the first network device pages the terminal device and time information of the paging moment at which the second network device pages the terminal device.

S1102: The core network device sends downlink data or downlink signaling of the terminal device to the third network device.

S1103: The third network device determines a paging moment time sequence based on the time information of the paging moment at which the first network device pages the terminal device and the time information of the paging moment at which the second network device pages the terminal device.

The paging moment time sequence indicates that the paging moment of the first network device is earlier than the paging moment of the second network device.

S1104: The third network device sends a first message to the first network device according to the paging moment time sequence.

The first message is used to indicate to page the terminal device, and the first message includes the capability information of the terminal device.

Optionally, the foregoing steps S1103 and S1104 may be replaced as follows:

S1104': The third network device sends a first message to the first network device before the paging moment of the first network device.

S1105: The first network device determines, based on the capability information of the terminal device, the paging moment at which the first network device pages the terminal device.

S1106: The first network device pages the terminal device at the paging moment at which the first network device pages the terminal device.

S1107: The terminal device sends an access message to the first network device.

The access message may be, for example, an RRC connection resume request message.

S1108: The first network device sends the second message to the third network device.

The second message is used to indicate that the terminal device accesses the first network device. The second message may be, for example, a user equipment context obtaining message.

In this case, if the third network device does not send the first message to the second network device, the third network device cancels sending the first message to the second network device, to prevent the second network device from performing an operation of paging the terminal device. Correspondingly, because the paging moment determined by the third network device for paging the terminal device is later than the moment at which the third network device receives the second message, the third network device also stops paging the terminal device. To be specific, when the third network device sends a first message to each network device one by one according to the paging moment time sequence, if the third network receives a second message indicating that the terminal device accesses a network device, for a network device to which the first message is not sent in the paging moment time sequence, the third network device no longer perform an action of sending the first message to the network device, to prevent the network device from paging the terminal device.

In this way, paging the terminal device in an inactive state in a paging area is completed.

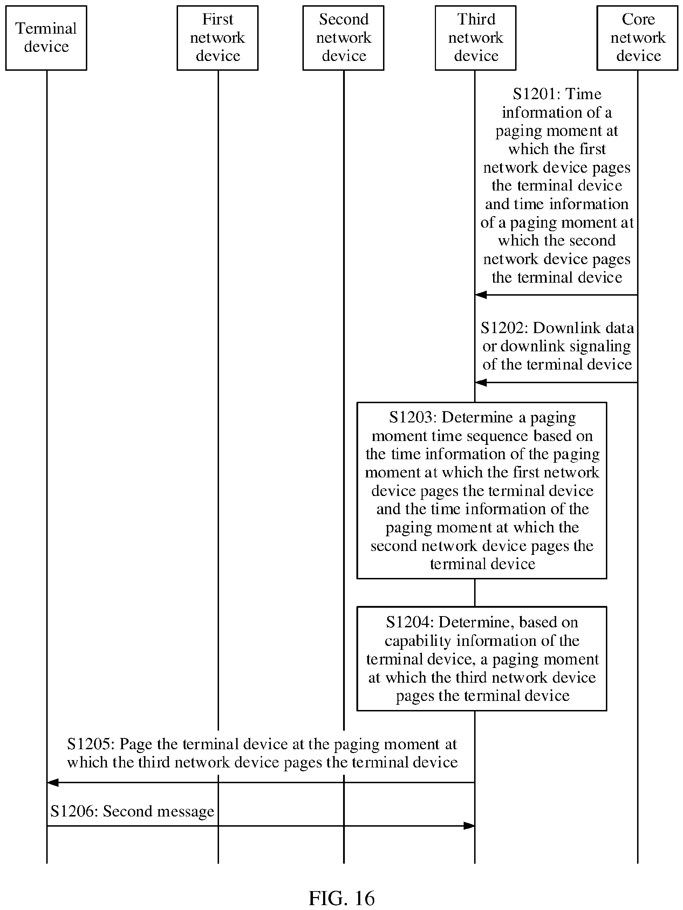

FIG. 16 is a flowchart of still another paging method according to an embodiment of this application. In this example, it is assumed that a terminal device currently camps on a cell served by a third network device. A paging moment determined by a second network device for paging the terminal device and a paging moment determined by a first network device for paging the terminal device are later than a paging moment at which the third network device pages the terminal device. First indication information is capability information of the terminal device. As shown in FIG. 16, the method includes the following steps.

S1201: A core network device sends, to the third network device, time information of the paging moment at which the first network device pages the terminal device and time information of the paging moment at which the second network device pages the terminal device.

S1202: The core network device sends downlink data or downlink signaling of the terminal device to the third network device.

S1203: The third network device determines a paging moment time sequence based on the time information of the paging moment at which the first network device pages the terminal device and the time information of the paging moment at which the second network device pages the terminal device.

The paging moment time sequence indicates that the paging moment of the first network device is earlier than the paging moment of the second network device. In this example, the paging moment determined by the second network device for paging the terminal device and the paging moment determined by the first network device for paging the terminal device are later than the paging moment at which the third network device pages the terminal device.

S1204: The third network device determines, based on the capability information of the terminal device, the paging moment at which the third network device pages the terminal device.

It should be understood that S1203 and S1204 are performed in any sequence.

S1205: The third network device pages the terminal device at the paging moment at which the third network device pages the terminal device.

S1206: The terminal device sends a second message to the third network device.

The second message is used to indicate that the terminal device accesses the third network device. In this example, the second message may be, for example, an RRC connection resume request message.

In this case, if the third network device does not send a first message to the second network device and/or the first network device, the third network device cancels sending the first message to the second network device and/or the first network device, to prevent the second network device and/or the first network device from performing an operation of paging the terminal device.

In this way, paging the terminal device in an inactive state in a paging area is completed.

According to the paging method provided in this embodiment of this application, paging moments for paging the terminal device in various cells are dispersed. In this way, after the terminal device accesses a cell, the third network device may stop sending a paging message to another cell in which paging of the terminal device is not started. Therefore, the terminal device is not paged in these cells, and paging overheads of paging the terminal device can be reduced in the paging area. In other words, according to the method in this embodiment, paging overheads of paging the terminal device by the network device in the paging area are reduced, and overheads of sending, by the third network device to the network device in the paging area, the first message used to page the terminal device are reduced.

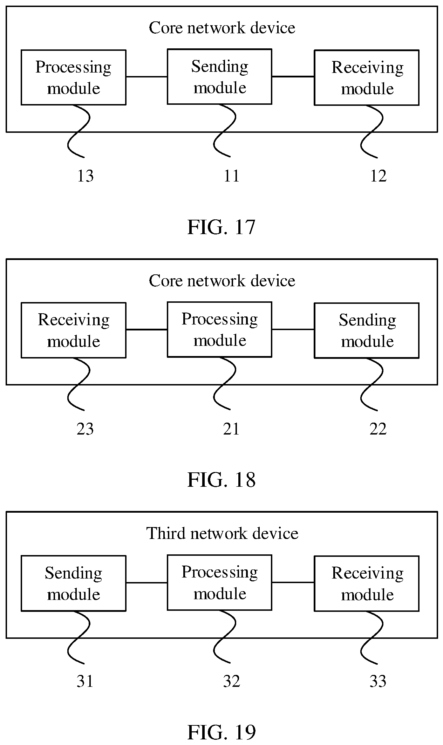

FIG. 17 is a schematic diagram of a structure of a core network device according to an embodiment of this application. As shown in FIG. 17, the core network device may include a sending module 11 and a receiving module 12. In a possible implementation, the core network device may further include a processing module 13.

The sending module 11 is configured to send a first message to a first network device and a second network device, where the first message is used to indicate the first network device and the second network device to page a terminal device, the first message includes first indication information, and the first indication information is used to indicate a manner of calculating paging moments at which the first network device and the second network device page the terminal device.

The receiving module 12 is configured to receive a second message from the first network device, where the second message is used to indicate that the terminal device accesses the first network device.

The sending module 11 is further configured to send a third message to the second network device, where the third message is used to indicate the second network device to cancel paging the terminal device.

In a possible implementation, the paging moment determined by the second network device for paging the terminal device is later than the paging moment determined by the first network device for paging the terminal device.

In a possible implementation, the first indication information is capability information of the terminal device, and the capability information is used to indicate that the terminal device supports an enhanced paging moment calculation manner. In this implementation, the processing module 13 is configured to obtain the capability information.

In a possible implementation, the second message includes an identifier of the terminal device.

The core network device provided in this embodiment of this application may perform actions of the core network device shown in FIG. 5 to FIG. 7 in the foregoing method embodiments. Implementation principles and technical effects of the core network device are similar, and details are not described herein again.

FIG. 18 is a schematic diagram of a structure of another core network device according to an embodiment of this application. As shown in FIG. 18, the core network device may include a processing module 21. In a possible implementation, the core network device may further include a processing module 22 and/or a receiving module 23.

The processing module 21 is configured to: obtain time information of a paging moment at which a first network device pages a terminal device, and control, based on the time information of the paging moment at which the first network device pages the terminal device, the sending module 22 to send a first message to the first network device, where the first message is used to page the terminal device. The time information of the paging moment may include, for example, an offset of a paging frame and/or an offset of a paging occasion.

For example, the processing module 21 is specifically configured to control, before the paging moment at which the first network device pages the terminal device, the sending module 22 to send the first message to the first network device. Alternatively, the processing module 21 is specifically configured to: determine a paging moment time sequence based on the time information of the paging moment at which the first network device pages the terminal device and time information of a paging moment at which a second network device pages the terminal device, and control, according to the paging moment time sequence, the sending module 22 to send the first message to the first network device. The paging moment time sequence indicates that the paging moment of the first network device is earlier than the paging moment of the second network device.

A manner in which the processing module 21 obtains the time information of the paging moment at which the first network device pages the terminal device is not limited in this embodiment. For example, the processing module 21 is specifically configured to receive, through the receiving module 23, the time information that is of the paging moment at which the first network device pages the terminal device and that is reported by the first network device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the processing module 21 is further configured to obtain the capability information.

In this scenario, the processing module 21 is further configured to: obtain the time information of the paging moment at which the second network device pages the terminal device, where the paging moment of the second network device is later than the paging moment of the first network device; and when the sending module 22 is not controlled, based on the time information of the paging moment at which the second network device pages the terminal device, to send the first message to the second network device, cancel sending the first message to the second network device if the receiving module 23 receives a second message from the first network device, where the second message is used to indicate that the terminal device accesses the first network device; or before the sending module 22 is not controlled, based on the time information of the paging moment at which the second network device pages the terminal device, to send the first message to the second network device, control, based on the time information of the paging moment at which the second network device pages the terminal device, the sending module 22 to send the first message to the second network device if the receiving module 23 does not receive a second message from the first network device.

In a possible implementation, the second message includes an identifier of the terminal device. For example, the second message may be a newly added message that is specifically used to indicate that the terminal device accesses the first network device, or may be an initial user equipment (user equipment, UE) message sent by the first network device to the core network device, or the like.

The core network device provided in this embodiment of this application may perform actions of the core network device shown in FIG. 8 to FIG. 10 in the foregoing method embodiments. Implementation principles and technical effects of the core network device are similar, and details are not described herein again.

FIG. 19 is a schematic diagram of a structure of a network device according to an embodiment of this application. As shown in FIG. 19, the network device is a third network device. The third network device includes a sending module 31 and a processing module 32. In a possible implementation, the third network device may further include a receiving module 33.

The sending module 31 is configured to send a first message to a first network device and a second network device, where the first message is used to indicate the first network device and the second network device to page a terminal device, the first message includes first indication information, the first indication information is used to indicate a manner of calculating paging moments at which the first network device and the second network device page the terminal device, and the third network device is a network device that stores a terminal connection context.

The processing module 32 is configured to obtain a second message, where the second message is used to indicate that the terminal device accesses the first network device or accesses the third network device.

The sending module 31 is further configured to send a third message to the second network device, where the third message is used to indicate the second network device to cancel paging the terminal device.

For example, if the second message is used to indicate that the terminal device accesses the first network device, in this scenario, the processing module 32 is specifically configured to receive the second message from the first network device through the receiving module 33. For example, the second message is a user equipment context obtaining message.

In this implementation, in a possible implementation, the processing module 32 is further configured to: determine, based on a manner of calculating a paging moment at which the third network device pages the terminal device, the paging moment at which the third network device pages the terminal device; and stop paging the terminal device when the paging moment at which the third network device pages the terminal device is later than a moment at which the receiving module 33 receives the second message. For example, the second message is a radio resource control connection resume request message.

In this implementation, in a possible implementation, the paging moment determined by the second network device for paging the terminal device is later than the paging moment determined by the first network device for paging the terminal device.

For another example, the second message is used to indicate that the terminal device accesses the third network device. In this scenario, the processing module 32 is specifically configured to receive the second message from the terminal device through the receiving module 33.

In this implementation, in a possible implementation, the sending module 31 is further configured to send the third message to the first network device.

In this implementation, in a possible implementation, the paging moment determined by the first network device for paging the terminal device and/or the paging moment determined by the second network device for paging the terminal device are/is later than a paging moment determined by the third network device for paging the terminal device.

In a possible implementation, the first indication information is capability information of the terminal device, and the capability information is used to indicate that the terminal device supports an enhanced paging moment calculation manner. In this implementation, the processing module 32 is further configured to obtain the capability information.

The third network device provided in this embodiment of this application may perform actions of the third network device shown in FIG. 11 to FIG. 13 in the foregoing method embodiments. Implementation principles and technical effects of the third network device are similar, and details are not described herein again.

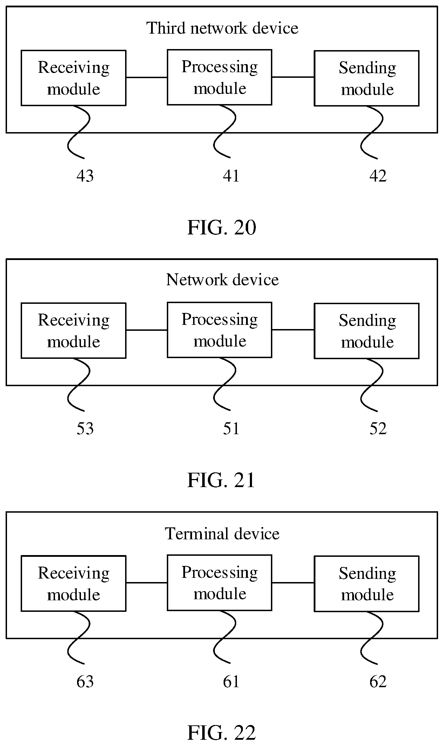

FIG. 20 is a schematic diagram of a structure of another network device according to an embodiment of this application. As shown in FIG. 20, the network device is a third network device. The third network device includes a processing module 41. In a possible implementation, the third network device may further include a sending module 42 and/or a receiving module 43.

The processing module 41 is configured to: obtain time information of a paging moment at which a first network device pages a terminal device, and control, based on the time information of the paging moment at which the first network device pages the terminal device, the sending module 42 to send a first message to the first network device. The third network device is a network device that stores a terminal connection context, and the first message is used to page the terminal device. The time information of the paging moment may include, for example, an offset of a paging frame and/or an offset of a paging occasion.

For example, the processing module 41 is specifically configured to control, before the paging moment at which the first network device pages the terminal device, the sending module 42 to send the first message to the first network device. Alternatively, the processing module 41 is specifically configured to: determine a paging moment time sequence based on the time information of the paging moment at which the first network device pages the terminal device and time information of a paging moment at which a second network device pages the terminal device, and control, according to the paging moment time sequence, the sending module 42 to send the first message to the first network device. The paging moment time sequence indicates that the paging moment of the first network device is earlier than the paging moment of the second network device.

A manner in which the processing module 41 obtains the time information of the paging moment at which the first network device pages the terminal device is not limited in this embodiment. For example, the processing module 41 is specifically configured to receive, from a core network device through the receiving module 43, the time information of the paging moment at which the first network device pages the terminal device.

In a possible implementation, the first message includes first indication information, and the first indication information is used to indicate a manner of calculating a paging moment for paging the terminal device. For example, the first indication information is capability information of the terminal device, and the capability information is used to indicate that the terminal device supports an enhanced paging moment calculation manner. In this implementation, the processing module 41 is further configured to obtain the capability information.

In this scenario, the processing module 41 is further configured to: obtain the time information of the paging moment at which the second network device pages the terminal device, where the paging moment at which the second network device pages the terminal device is later than the paging moment at which the first network device pages the terminal device. When the sending module 42 is not controlled, based on the time information of the paging moment at which the second network device pages the terminal device, to send the first message to the second network device, the processing module 41 cancels sending the first message to the second network device if the receiving module 43 receives a second message from the first network device that pages the terminal device. The second message is used to indicate that the terminal device accesses the first network device. Alternatively, before the sending module 42 is not controlled, based on the time information of the paging moment at which the second network device pages the terminal device, to send the first message to the second network device, the processing module 41 controls, based on the time information of the paging moment at which the second network device pages the terminal device, the sending module 42 to send the first message to the second network device if the receiving module 43 does not receive a second message from the first network device.

In a possible implementation, the processing module 41 is further configured to obtain time information of a paging moment at which the third network device pages the terminal device. When the processing module 41 does not page the terminal device based on the time information of the paging moment at which the third network device pages the terminal device, the processing module 41 cancels paging the terminal device if the receiving module 43 receives a second message from the first network device. Alternatively, before the processing module 41 does not page the terminal device based on the time information of the paging moment at which the third network device pages the terminal device, the processing module 41 pages the terminal device based on the time information of the paging moment at which the third network device pages the terminal device if the receiving module 43 does not receive a second message from the first network device.

In the foregoing embodiment, the second message may be, for example, a user equipment context obtaining message.

The third network device provided in this embodiment of this application may perform actions of the third network device shown in FIG. 14 to FIG. 16 in the foregoing method embodiments. Implementation principles and technical effects of the third network device are similar, and details are not described herein again.

FIG. 21 is a schematic diagram of a structure of still another network device according to an embodiment of this application. As shown in FIG. 21, the network device includes a processing module 51. In a possible implementation, the network device may further include a sending module 52 and/or a receiving module 53.

The processing module 51 is configured to: obtain first indication information, and determine, based on the first indication information, a paging moment for paging a terminal device, where the first indication information is used to indicate a manner of calculating the paging moment at which the network device pages the terminal device.

In a possible implementation, the first indication information is capability information of the terminal device, and the capability information is used to indicate that the terminal device supports an enhanced paging moment calculation manner. In this implementation, the receiving module 53 is configured to receive a paging message from a core network device or a third network device, where the paging message is used to page the terminal device, and the paging message carries the capability information. The third network device is a network device that stores a terminal connection context. Alternatively, the receiving module 53 is configured to receive the capability information from the core network device.

In a possible implementation, the processing module 51 is specifically configured to: obtain time information of the paging moment based on the first indication information, and calculate the paging moment based on the time information of the paging moment. For example, the time information of the paging moment includes an offset of a paging frame and/or an offset of a paging occasion; a first offset of a paging frame and a second offset of the paging frame; or a first offset of a paging frame, a second offset of the paging frame, and an offset of a paging occasion.

A manner in which the processing module 51 obtains the time information of the paging moment is not limited in this embodiment. For example, the processing module 51 is specifically configured to determine the time information of the paging moment based on an identifier of a cell in which the terminal device is paged.

In a possible implementation, the sending module 52 is configured to send the time information of the paging moment to the terminal device; or send second indication information to the terminal device, where the second indication information is used to enable an enhanced paging moment paging function.

After the processing module 51 determines the paging moment for paging the terminal device, the processing module 51 pages the terminal device at the paging moment for paging the terminal device. In this implementation, if the terminal device is a terminal device in an idle state, the receiving module 53 is configured to receive an access message from the terminal device. The sending module 52 is configured to send a second message to the core network device, where the second message is used to indicate that the terminal device accesses the network device. For example, the access message may be a radio resource control establishment request message or a radio resource control establishment complete message. The second message may be an initial user equipment message. If the terminal device is a terminal device in an inactive state, the receiving module 53 is configured to receive an access message from the terminal device. The sending module 52 is configured to send a second message to the third network device, where the second message is used to indicate that the terminal device accesses the network device, and the third network device is the network device that stores the terminal connection context. For example, the access message is a radio resource control connection resume request message. The second message is a user equipment context obtaining message.

After the processing module 51 determines the paging moment for paging the terminal device, if the receiving module 53 receives a third message from the core network device or the third network device, where the third message is used to indicate the network device to cancel paging the terminal device, the processing module 51 is further configured to cancel paging the terminal device when a paging message for the terminal device is not sent to the terminal device.

The network device provided in this embodiment of this application may perform actions of the first network device and/or the second network device shown in FIG. 5 to FIG. 16 in the foregoing method embodiments. Implementation principles and technical effects of the network device are similar, and details are not described herein again.

FIG. 22 is a schematic diagram of a structure of a terminal device according to an embodiment of this application. As shown in FIG. 22, the terminal device includes a processing module 61. In a possible implementation, the terminal device may further include a sending module 62 and/or a receiving module 63.

The processing module 61 is configured to: determine that a network device corresponding to a cell on which the terminal device camps supports an enhanced paging moment paging function; determine a monitoring moment of a paging message based on time information of a paging moment; and monitor the paging message at the monitoring moment.

In a possible implementation, the processing module 61 is specifically configured to: obtain the time information of the paging moment, and determine, based on the time information of the paging moment, that the network device supports the enhanced paging moment paging function. Alternatively, the receiving module 63 receives second indication information from the network device, where the second indication information is used to enable the enhanced paging moment paging function. The processing module 61 is specifically configured to determine, based on the second indication information, that the network device supports the enhanced paging moment paging function.

In the foregoing embodiment, the time information of the paging moment may include an offset of a paging occasion and/or an offset of a paging frame; a first offset of a paging frame and a second offset of the paging frame; or a first offset of a paging frame, a second offset of the paging frame, and an offset of a paging occasion.

A manner in which the processing module 61 obtains the time information of the paging moment is not limited in this embodiment. The processing module 61 is specifically configured to determine the time information of the paging moment based on an identifier of the cell. Alternatively, the receiving module 63 is configured to receive the time information of the paging moment from the network device.

In a possible implementation, the sending module 62 is configured to send capability information to a core network device, the network device, or a third network device, where the capability information is used to indicate that the terminal device supports an enhanced paging moment calculation manner, and the third network device is a network device that stores a terminal connection context.

The terminal device provided in this embodiment of this application may perform actions of the terminal device shown in FIG. 5 to FIG. 16 in the foregoing method embodiments. Implementation principles and technical effects of the terminal device are similar, and details are not described herein again.

It should be noted that, it should be understood that the receiving module may be a receiver or a communication interface during actual implementation, and the sending module may be a transmitter or a communication interface during actual implementation. The processing module may be implemented in a form of software invoked by a processing element, or implemented in a form of hardware. For example, the processing module may be a processing element separately disposed, or may be integrated into a chip of the foregoing apparatus for implementation. In addition, the processing module may be stored in a memory of the foregoing apparatus in a form of program code, and is invoked by a processing element of the foregoing apparatus to perform a function of the processing module. In addition, all or some of the modules may be integrated together, or may be independently implemented. The processing element herein may be an integrated circuit, and has a signal processing capability. In an implementation process, steps in the foregoing methods or the foregoing modules may be implemented by using a hardware integrated logical circuit in the processing element, or by using instructions in a form of software.

For example, the modules may be configured as one or more integrated circuits for implementing the method, such as one or more application specific integrated circuits (application specific integrated circuits, ASICs), one or more microprocessors (microprocessors), or one or more field programmable gate arrays (field programmable gate arrays, FPGAs). For another example, when one of the modules is implemented by invoking program code by a processing element, the processing element may be a general-purpose processor, such as a central processing unit (central processing unit, CPU), or another processor that can invoke the program code. For another example, these modules may be integrated together, and implemented in a form of a system-on-a-chip (system-on-a-chip, SOC).

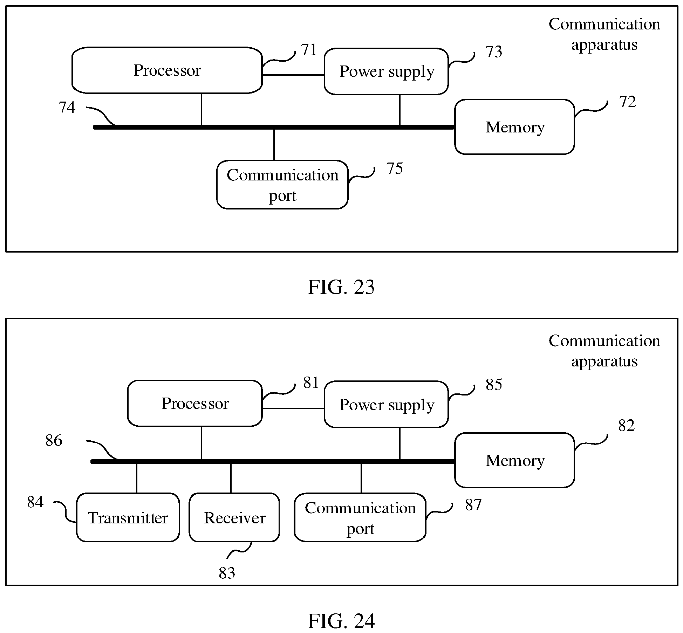

FIG. 23 is a schematic diagram of a structure of a communication apparatus according to an embodiment of this application. As shown in FIG. 23, the communication apparatus may include a processor 71 (for example, a CPU) and a memory 72. The memory 72 may include a high-speed random-access memory (random-access memory, RAM), and may further include a non-volatile memory (non-volatile memory, NVM), for example, at least one magnetic disk memory. The memory 72 may store various instructions, to complete various processing functions and implement method steps of this application. Optionally, the communication apparatus in this application may further include a power supply 73, a communication bus 74, and a communication port 75. The communication bus 74 is configured to implement a communication connection between elements. The communication port 75 is configured to implement connection and communication between the communication apparatus and another peripheral.

In this embodiment of this application, the memory 72 is configured to store computer-executable program code, and the program code includes instructions. When the processor 71 executes the instructions, the instructions enable the processor 71 of the communication apparatus to perform actions of the core network device in the foregoing method embodiments. Implementation principles and technical effects of the communication apparatus are similar, and details are not described herein again.

Alternatively, when the processor 71 executes the instructions, the instructions enable the processor 71 of the communication apparatus to perform actions of the first network device in the foregoing method embodiments. Implementation principles and technical effects of the communication apparatus are similar, and details are not described herein again.

Alternatively, when the processor 71 executes the instructions, the instructions enable the processor 71 of the communication apparatus to perform actions of the second network device in the foregoing method embodiments. Implementation principles and technical effects of the communication apparatus are similar, and details are not described herein again.

Alternatively, when the processor 71 executes the instructions, the instructions enable the processor 71 of the communication apparatus to perform actions of the third network device in the foregoing method embodiments. Implementation principles and technical effects of the communication apparatus are similar, and details are not described herein again.

FIG. 24 is a schematic diagram of a structure of another communication apparatus according to an embodiment of this application. As shown in FIG. 24, the communication apparatus may include a processor 81 (for example, a CPU), a memory 82, a receiver 83, and a transmitter 84. Both the receiver 83 and the transmitter 84 are coupled to the processor 81. The processor 81 controls a receiving action of the receiver 83, and the processor 81 controls a sending action of the transmitter 84. The memory 82 may include a high-speed random-access memory (random-access memory, RAM), and may further include a non-volatile memory (non-volatile memory, NVM), for example, at least one magnetic disk memory. The memory 82 may store various instructions, to complete various processing functions and implement method steps of this application. Optionally, the communication apparatus in this application may further include a power supply 85, a communication bus 86, and a communication port 87. The receiver 83 and the transmitter 84 may be integrated into a transceiver of the communication apparatus, or may be independent transceiver antennas on the communication apparatus. The communication bus 86 is configured to implement a communication connection between elements. The communication port 87 is configured to implement connection and communication between the communication apparatus and another peripheral.

In this embodiment of this application, the memory 82 is configured to store computer-executable program code, and the program code includes instructions. When the processor 81 executes the instructions, the instructions enable the processor 81 of the communication apparatus to perform a processing action of the terminal device in the foregoing method embodiments, the receiver 83 to perform a receiving action of the terminal device in the foregoing method embodiments, and the transmitter 84 to perform a sending action of the terminal device in the foregoing method embodiments. Implementation principles and technical effects of the communication apparatus are similar, and details are not described herein again.

In the devices or apparatuses in FIG. 17 to FIG. 24 in the embodiments of this application, the processing module (or the processor), the storage module (or the memory), and the transceiver module (the transceiver) communicate with each other through an internal connection path, to transfer a control signal and/or a data signal. The foregoing method embodiments of this application may be applied to the processor, or the processor implements the steps of the foregoing method embodiments. The processor may be an integrated circuit chip and has a signal processing capability. In an implementation process, the steps in the foregoing method embodiments may be completed by using a hardware integrated logic circuit in the processor, or by using instructions in a form of software. The processor may be a central processing unit (central processing unit, CPU), a network processor (network processor, NP), a combination of a CPU and an NP, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The methods, the steps, and logical block diagrams that are disclosed in this application may be implemented or performed. The general-purpose processor may be a microprocessor, or the processor may be any conventional processor or the like. The steps of the methods disclosed in this application may be directly performed by a hardware decoding processor, or may be performed by using a combination of hardware in the decoding processor and a software module. A software module may be located in a mature storage medium in the art, such as a random-access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. Although only one processor is shown in the figure, the apparatus may include a plurality of processors, or the processor includes a plurality of processing modules. Specifically, the processor may be a single-core (single-CPU) processor, or may be a multi-core (multi-CPU) processor.

The memory is configured to store computer instructions executed by the processor. The memory may be a storage circuit or a memory. The memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM), used as an external cache. The memory may be independent of the processor, or may be a storage module in the processor. This is not limited herein. Although only one memory is shown in the figure, the apparatus may alternatively include a plurality of memories, or the memory includes a plurality of storage modules.

The transceiver is configured to implement content exchange between the processor and another module or network element. Specifically, the transceiver may be a communication interface of the apparatus, or may be a transceiver circuit or a communication module, or may be a transceiver. The transceiver may alternatively be a communication interface or a transceiver circuit of the processor. Optionally, the transceiver may be a transceiver chip. The transceiver may further include a sending module and/or a receiving module. In a possible implementation, the transceiver may include at least one communication interface. In another possible implementation, the transceiver may alternatively be a module implemented in a form of software. In the embodiments of this application, the processor may interact with another module or network element through the transceiver. For example, the processor obtains or receives content from another network element through the transceiver. If the processor and the transceiver are two physically separated components, the processor may exchange content with another module in the apparatus without using the transceiver.

In a possible implementation, the processor, the memory, and the transceiver may be connected to each other by using a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In the embodiments of this application, the word "example" or "for example" is used to represent giving an example, an illustration, or description. Any embodiment or design scheme described as an "example" or "for example" in the embodiments of this application should not be explained as being more preferred or having more advantages than another embodiment or design scheme. Exactly, use of the words such as "example" or "for example" is intended to present a relative concept in a specific manner.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or a function that needs to be implemented. Specific names of the messages constitute no limitation on this application. For example, the messages may alternatively be a first message, a second message, and a third message. These messages may be some specific messages, or may be some fields in the messages. These messages may alternatively represent various service-based operations.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

In this specification, "a plurality of" means two or more than two. The term "and/or" in this specification describes only an association relationship for describing associated objects and indicates that there may be three relationships. For example, A and/or B may represent the following three cases: Only A exists, both A and B exist, and only B exists. In addition, the character "/" in this specification generally represents an "or" relationship between the associated objects, and the character "/" in a formula represents a "division" relationship between the associated objects.

It may be understood that numerical symbols used in the embodiments of this application are differentiated merely for ease of description, but are not used to limit the scope of the embodiments of this application.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

**Claims**

1. A paging method, comprising:

    sending, by a core network device, a first message to a first network device and a second network device, wherein the first message indicates the first network device and the second network device to page a terminal device, the first message comprises first indication information, and the first indication information indicates a manner of calculating paging moments at which the first network device and the second network device page the terminal device;
    receiving, by the core network device, a second message from the first network device, wherein the second message indicates that the terminal device accesses the first network device; and
    sending, by the core network device, a third message to the second network device, wherein the third message indicates the second network device to cancel paging the terminal device.

2. The method according to claim 1, wherein
    the paging moment determined by the second network device for paging the terminal device is later than the paging moment determined by the first network device for paging the terminal device.

3. The method according to claim 1 or 2, wherein the first indication information is capability information of the terminal device, and the capability information indicates that the terminal device supports an enhanced paging moment calculation manner.

4. The method according to claim 3, wherein the method further comprises:
    obtaining, by the core network device, the capability information.

5. The method according to any one of claims 1 to 4, wherein the second message comprises an identifier of the terminal device.

6. A paging method, comprising:

    obtaining, by a core network device, time information of a paging moment at which a first network device pages a terminal device; and
    sending, by the core network device, a first message to the first network device based on the time information of the paging moment at which the first network device pages the terminal device, wherein the first message is used to page the terminal device.

7. The method according to claim 6, wherein the first message comprises first indication information, and the first indication information indicates a manner of calculating a paging moment for paging the terminal device.

**8.** The method according to claim 7, wherein the first indication information is capability information of the terminal device, and the capability information indicates that the terminal device supports an enhanced paging moment calculation manner.

**9.** The method according to claim 8, wherein the method further comprises:
obtaining, by the core network device, the capability information.

**10.** The method according to any one of claims 7 to 9, wherein the method further comprises: obtaining, by the core network device, time information of a paging moment at which a second network device pages the terminal device, wherein the paging moment of the second network device is later than the paging moment of the first network device; and

when the core network device does not send the first message to the second network device based on the time information of the paging moment at which the second network device pages the terminal device, canceling, by the core network device, sending the first message to the second network device if the core network device receives a second message from the first network device, wherein the second message indicates that the terminal device accesses the first network device; or
when the core network device does not send the first message to the second network device based on the time information of the paging moment at which the second network device pages the terminal device, sending, by the core network device, the first message to the second network device based on the time information of the paging moment at which the second network device pages the terminal device if the core network device does not receive a second message from the first network device.

**11.** The method according to claim 10, wherein the second message comprises an identifier of the terminal device.

**12.** The method according to claim 10 or 11, wherein the sending, by the core network device, a first message to the first network device based on the time information of the paging moment at which the first network device pages the terminal device comprises:
sending, by the core network device, the first message to the first network device before the paging moment at which the first network device pages the terminal device.

**13.** The method according to claim 10 or 11, wherein the sending, by the core network device, a first message to the first network device based on the time information of the paging moment at which the first network device pages the terminal device comprises:

determining, by the core network device, a paging moment time sequence based on the time information of the paging moment at which the first network device pages the terminal device and the time information of the paging moment at which the second network device pages the terminal device, wherein the paging moment time sequence indicates that the paging moment of the first network device is earlier than the paging moment of the second network device; and
sending, by the core network device, the first message to the first network device according to the paging moment time sequence.

**14.** The method according to any one of claims 6 to 13, wherein the obtaining, by a core network device, time information of a paging moment at which a first network device pages a terminal device comprises:
receiving, by the core network device, the time information that is of the paging moment at which the first network device pages the terminal device and that is reported by the first network device.

**15.** The method according to any one of claims 6 to 14, wherein the time information of the paging moment comprises:
an offset of a paging frame and/or an offset of a paging occasion.

**16.** A paging method, comprising:

obtaining, by a network device, first indication information, wherein the first indication information indicates a manner of calculating a paging moment at which the network device pages a terminal device; and
determining, by the network device based on the first indication information, the paging moment for paging the terminal device.

17. The method according to claim 16, wherein the first indication information is capability information of the terminal device, and the capability information indicates that the terminal device supports an enhanced paging moment calculation manner.

18. The method according to claim 16 or 17, wherein the determining, by the network device based on the first indication information, the paging moment for paging the terminal device comprises:

   obtaining, by the network device, time information of the paging moment based on the first indication information; and
   calculating, by the network device, the paging moment based on the time information of the paging moment.

19. The method according to claim 18, wherein the time information of the paging moment comprises:

   an offset of a paging frame and/or an offset of a paging occasion;
   a first offset of a paging frame and a second offset of the paging frame; or
   a first offset of a paging frame, a second offset of the paging frame, and an offset of a paging occasion.

20. The method according to claim 18 or 19, wherein the obtaining time information of the paging moment comprises: determining, by the network device, the time information of the paging moment based on an identifier of a cell in which the terminal device is paged.

21. The method according to any one of claims 18 to 20, wherein the method further comprises:

   sending, by the network device, the time information of the paging moment to the terminal device; or
   sending, by the network device, second indication information to the terminal device, wherein the second indication information is used to enable an enhanced paging moment paging function.

22. The method according to any one of claims 16 to 21, wherein the method further comprises:
   paging, by the network device, the terminal device at the paging moment for paging the terminal device.

23. The method according to claim 22, wherein the method further comprises:

   receiving, by the network device, an access message from the terminal device; and
   sending, by the network device, a second message to a core network device, wherein the second message indicates that the terminal device accesses the network device.

24. The method according to claim 23, wherein the access message is a radio resource control establishment request message or a radio resource control establishment complete message.

25. The method according to claim 23 or 24, wherein the second message is an initial user equipment message.

26. The method according to claim 22, wherein the method further comprises:

   receiving, by the network device, an access message from the terminal device; and
   sending, by the network device, a second message to a third network device, wherein the second message indicates that the terminal device accesses the network device, and the third network device is a network device that stores a terminal connection context.

27. The method according to claim 26, wherein the access message is a radio resource control connection resume request message.

28. The method according to claim 26 or 27, wherein the second message is a user equipment context obtaining message.

29. The method according to any one of claims 16 to 21, wherein the method further comprises:

   receiving, by the network device, a third message from a core network device or a third network device, wherein the third message indicates the network device to cancel paging the terminal device, and the third network device is a network device that stores a terminal connection context; and

canceling, by the network device, paging the terminal device if a paging message of the network device for the terminal device is not sent to the terminal device.

30. The method according to any one of claims 17 to 29, wherein the obtaining, by the network device, the capability information comprises:

receiving, by the network device, a paging message from the core network device or the third network device, wherein the paging message is used to page the terminal device, the paging message carries the capability information, and the third network device is the network device that stores the terminal connection context; or receiving, by the network device, the capability information from the core network device.

31. A paging method, comprising:

determining, by a terminal device, that a network device corresponding to a cell on which the terminal device camps supports an enhanced paging moment paging function; determining, by the terminal device, a monitoring moment for a paging message based on time information of a paging moment; and monitoring, by the terminal device, the paging message at the monitoring moment.

32. The method according to claim 31, wherein the determining, by a terminal device, that a network device corresponding to a cell on which the terminal device camps supports an enhanced paging moment paging function comprises:

obtaining, by the terminal device, the time information of the paging moment; and determining, by the terminal device based on the time information of the paging moment, that the network device supports the enhanced paging moment paging function; or receiving, by the terminal device, second indication information from the network device, wherein the second indication information is used to enable the enhanced paging moment paging function; and determining, by the terminal device based on the second indication information, that the network device supports the enhanced paging moment paging function.

33. The method according to claim 31 or 32, wherein the time information of the paging moment comprises:

an offset of a paging occasion and/or an offset of a paging frame; a first offset of a paging frame and a second offset of the paging frame; or a first offset of a paging frame, a second offset of the paging frame, and an offset of a paging occasion.

34. The method according to any one of claims 31 to 33, wherein the obtaining, by the terminal device, the time information of the paging moment comprises:

determining, by the terminal device, the time information of the paging moment based on an identifier of the cell; or receiving, by the terminal device, the time information of the paging moment from the network device.

35. The method according to any one of claims 31 to 34, wherein the method further comprises:
sending, by the terminal device, capability information to a core network device, the network device, or a third network device, wherein the capability information indicates that the terminal device supports an enhanced paging moment calculation manner, and the third network device is a network device that stores a terminal connection context.

36. A core network device, comprising:

a sending module, configured to send a first message to a first network device and a second network device, wherein the first message indicates the first network device and the second network device to page a terminal device, the first message comprises first indication information, and the first indication information indicates a manner of calculating paging moments at which the first network device and the second network device page the terminal device; and a receiving module, configured to receive a second message from the first network device, wherein the second message indicates that the terminal device accesses the first network device, wherein the sending module is further configured to send a third message to the second network device, wherein the third message indicates the second network device to cancel paging the terminal device.

37. The device according to claim 36, wherein the paging moment determined by the second network device for paging the terminal device is later than the paging moment determined by the first network device for paging the terminal device.

38. The device according to claim 36 or 37, wherein the first indication information is capability information of the terminal device, and the capability information indicates that the terminal device supports an enhanced paging moment calculation manner.

39. The device according to claim 38, wherein the core network device further comprises:
a processing module, configured to obtain the capability information.

40. The device according to any one of claims 36 to 39, wherein the second message comprises an identifier of the terminal device.

41. A core network device, comprising:
a processing module, configured to: obtain time information of a paging moment at which a first network device pages a terminal device, and control, based on the time information of the paging moment at which the first network device pages the terminal device, a sending module to send a first message to the first network device, wherein the first message is used to page the terminal device.

42. The device according to claim 41, wherein the first message comprises first indication information, and the first indication information indicates a manner of calculating a paging moment for paging the terminal device.

43. The device according to claim 42, wherein the first indication information is capability information of the terminal device, and the capability information indicates that the terminal device supports an enhanced paging moment calculation manner.

44. The device according to claim 43, wherein
the processing module is further configured to obtain the capability information.

45. The device according to any one of claims 42 to 44, wherein the core network device further comprises a receiving module, wherein

the processing module is further configured to: obtain time information of a paging moment at which a second network device pages the terminal device, wherein the paging moment of the second network device is later than the paging moment of the first network device; and
when the sending module is not controlled, based on the time information of the paging moment at which the second network device pages the terminal device, to send the first message to the second network device, cancel sending the first message to the second network device if the receiving module receives a second message from the first network device, wherein the second message indicates that the terminal device accesses the first network device; or
before the sending module is not controlled, based on the time information of the paging moment at which the second network device pages the terminal device, to send the first message to the second network device, control, based on the time information of the paging moment at which the second network device pages the terminal device, the sending module to send the first message to the second network device if the receiving module does not receive a second message from the first network device.

46. The device according to claim 45, wherein the second message comprises an identifier of the terminal device.

47. The device according to claim 45 or 46, wherein
the processing module is specifically configured to control, before the paging moment at which the first network device pages the terminal device, the sending module to send the first message to the first network device.

48. The device according to claim 45 or 46, wherein

the processing module is specifically configured to: determine a paging moment time sequence based on the time information of the paging moment at which the first network device pages the terminal device and the time information of the paging moment at which the second network device pages the terminal device, and control, according to the paging moment time sequence, the sending module to send the first message to the first network device, wherein

the paging moment time sequence indicates that the paging moment of the first network device is earlier than the paging moment of the second network device.

49. The device according to any one of claims 41 to 48, wherein the core network device further comprises the receiving module, wherein

the processing module is specifically configured to receive, through the receiving module, the time information that is of the paging moment at which the first network device pages the terminal device and that is reported by the first network device.

50. The device according to any one of claims 41 to 49, wherein the time information of the paging moment comprises: an offset of a paging frame and/or an offset of a paging occasion.

51. A network device, comprising:
a processing module, configured to: obtain first indication information, and determine, based on the first indication information, a paging moment for paging a terminal device, wherein the first indication information indicates a manner of calculating the paging moment at which the network device pages the terminal device.

52. The device according to claim 51, wherein the first indication information is capability information of the terminal device, and the capability information indicates that the terminal device supports an enhanced paging moment calculation manner.

53. The device according to claim 51 or 52, wherein
the processing module is specifically configured to: obtain time information of the paging moment based on the first indication information, and calculate the paging moment based on the time information of the paging moment.

54. The device according to claim 53, wherein the time information of the paging moment comprises:

an offset of a paging frame and/or an offset of a paging occasion;
a first offset of a paging frame and a second offset of the paging frame; or
a first offset of a paging frame, a second offset of the paging frame, and an offset of a paging occasion.

55. The device according to claim 53 or 54, wherein
the processing module is specifically configured to determine the time information of the paging moment based on an identifier of a cell in which the terminal device is paged.

56. The device according to any one of claims 53 to 55, wherein the network device further comprises a sending module, wherein

the sending module is configured to: send the time information of the paging moment to the terminal device; or send second indication information to the terminal device, wherein the second indication information is used to enable an enhanced paging moment paging function.

57. The device according to any one of claims 51 to 56, wherein
the processing module is further configured to page the terminal device at the paging moment for paging the terminal device.

58. The device according to claim 57, wherein the network device further comprises a receiving module and the sending module, wherein

the receiving module is configured to receive an access message from the terminal device; and
the sending module is configured to send a second message to a core network device, wherein the second message indicates that the terminal device accesses the network device.

59. The device according to claim 58, wherein the access message is a radio resource control establishment request message or a radio resource control establishment complete message.

60. The device according to claim 58 or 59, wherein the second message is an initial user equipment message.

61. The device according to claim 57, wherein the network device further comprises a receiving module and the sending module, wherein

the receiving module is configured to receive an access message from the terminal device; and
the sending module is configured to send a second message to a third network device, wherein the second message indicates that the terminal device accesses the network device, and the third network device is a network device that stores a terminal connection context.

62. The device according to claim 61, wherein the access message is a radio resource control connection resume request message.

63. The device according to claim 61 or 62, wherein the second message is a user equipment context obtaining message.

64. The device according to any one of claims 51 to 56, wherein the network device further comprises a receiving module and the sending module, wherein

the receiving module is configured to receive a third message from a core network device or a third network device, wherein the third message indicates the network device to cancel paging the terminal device, and the third network device is a network device that stores a terminal connection context; and
the processing module is further configured to cancel paging the terminal device when a paging message for the terminal device is not sent to the terminal device.

65. The device according to any one of claims 52 to 64, wherein the network device further comprises the receiving module, wherein

the receiving module is configured to: receive a paging message from the core network device or the third network device, wherein the paging message is used to page the terminal device, the paging message carries the capability information of the terminal device, and the third network device is the network device that stores the terminal connection context; or
receive the capability information from the core network device.

66. A terminal device, comprising:
a processing module, configured to: determine that a network device corresponding to a cell on which the terminal device camps supports an enhanced paging moment paging function; determine a monitoring moment of a paging message based on time information of a paging moment; and monitor the paging message at the monitoring moment.

67. The device according to claim 66, wherein

the processing module is specifically configured to: obtain the time information of the paging moment, and determine, based on the time information of the paging moment, that the network device supports the enhanced paging moment paging function; or
the terminal device further comprises a receiving module, wherein
the receiving module receives second indication information from the network device, wherein the second indication information is used to enable the enhanced paging moment paging function; and
the processing module is specifically configured to determine, based on the second indication information, that the network device supports the enhanced paging moment paging function.

68. The device according to claim 66 or 67, wherein the time information of the paging moment comprises:

an offset of a paging occasion and/or an offset of a paging frame;
a first offset of a paging frame and a second offset of the paging frame; or
a first offset of a paging frame, a second offset of the paging frame, and an offset of a paging occasion.

69. The device according to any one of claims 66 to 68, wherein the terminal device further comprises the receiving module, wherein

the processing module is specifically configured to determine the time information of the paging moment based on an identifier of the cell; or

the receiving module is configured to receive the time information of the paging moment from the network device.

70. The device according to any one of claims 66 to 69, wherein the terminal device further comprises a sending module, wherein

the sending module is configured to send capability information to a core network device, the network device, or a third network device, wherein the capability information indicates that the terminal device supports an enhanced paging moment calculation manner, and the third network device is a network device that stores a terminal connection context.

71. A core network device, wherein the core network device comprises a processor and a memory, wherein

the memory is configured to store computer-executable program code, and the program code comprises instructions; and when the processor executes the instructions, the instructions enable the core network device to perform the method according to any one of claims 1 to 15.

72. A network device, wherein the network device comprises a processor and a memory, wherein

the memory is configured to store computer-executable program code, and the program code comprises instructions; and when the processor executes the instructions, the instructions enable the network device to perform the method according to any one of claims 16 to 30.

73. A terminal device, wherein the terminal device comprises a processor, a memory, a receiver, and a transmitter, wherein both the receiver and the transmitter are coupled to the processor, the processor controls a receiving action of the receiver, and the processor controls a sending action of the transmitter; and

the memory is configured to store computer-executable program code, and the program code comprises instructions; and when the processor executes the instructions, the instructions enable the terminal device to perform the method according to any one of claims 31 to 35.

74. A communication system, wherein the communication system comprises the core network device according to claim 71, the network device according to claim 72, and the terminal device according to claim 73.

75. A computer-readable storage medium, configured to store a computer program or instructions, wherein when the computer program or the instructions is/are run on a computer, the computer is enabled to perform the method according to any one of claims 1 to 35.

76. A chip, wherein the chip stores a computer program, and when the computer program is executed by the chip, the method according to any one of claims 1 to 35 is implemented.

Terminal device 130

Terminal device 140

Core network
device 110

Radio access
network device 120

FIG. 1

FIG. 2

| Terminal device | gNB 1 | gNB 2 | AMF network element |
|---|---|---|---|

S201: Downlink data or downlink signaling of the terminal device

S202: Paging message

S203: Page the terminal device in a cell 1 at a paging moment for paging the terminal device

S204: Page the terminal device in a cell 2 at a paging moment for paging the terminal device

S205: RRC connection resume request message

S206: Context obtaining message

S207: Context of the terminal device

S208: RRC connection resume message

S209: RRC connection resume complete message

S210: Path switch request message

FIG. 3

First round of
paging area

Second round of
paging area

FIG. 4

| First network device | Second network device | Core network device |
|---|---|---|

S301: First message

S302: Second message

S303: Third message

FIG. 5

FIG. 6

| Terminal device | First network device | Second network device | Core network device |
|---|---|---|---|

S401: First message

S402: Determine, based on capability information of the terminal device, a paging moment for paging the terminal device

S403: Determine, based on the capability information of the terminal device, a paging moment for paging the terminal device

S404: Page the terminal device at the paging moment for paging the terminal device

S405: Access message

S406: Second message

S407: Third message

FIG. 7

First network device

Core network device

S501: Obtain time information
of a paging moment at which the
first network device pages a
terminal device

S502: Send a first message to the first network device
based on the time information of the paging moment at
which the first network device pages the terminal device

FIG. 8

Core network device

First message

Second message

First message

First network device

Paging

Access

Terminal device

Second network device

Paging cycle

Paging cycle

☐ Paging moment in the paging cycle

▨ Paging moment of the first network device

▤ Paging moment of the second network device

FIG. 9

EP 3 975 634 A1

| Terminal device | First network device | Second network device | Core network device |

S601: Report time information of a paging moment at which the first network device pages the terminal device

S602: Report time information of a paging moment at which the second network device pages the terminal device

S603: Determine a paging moment time sequence based on the time information of the paging moment at which the first network device pages the terminal device and the time information of the paging moment at which the second network device pages the terminal device

S604: Send a first message to the first network device according to the paging moment time sequence

S605: Determine, based on capability information of the terminal device, the paging moment for paging the terminal device

S606: Page the terminal device at the paging moment for paging the terminal device

S607: Access message

S608: Second message

FIG. 10

| First network device | | Second network device | | Third network device |

S701: First message

S702: Obtain a second message

S703: Third message

FIG. 11

| Terminal device | First network device | Second network device | Third network device | Core network device |
|---|---|---|---|---|

S801: Downlink data or downlink signaling of the terminal device

S802: First message

S803: Determine, based on capability information of the terminal device, a paging moment for paging the terminal device

S804: Determine, based on the capability information of the terminal device, a paging moment for paging the terminal device

S805: Determine, based on the capability information of the terminal device, a paging moment for paging the terminal device

S806: Page the terminal device at the paging moment at which the first network device pages the terminal device

S807: Page the terminal device at the paging moment at which the third network device pages the terminal device

S808: Second message

S809: Third message

FIG. 12

FIG. 13

First network device

Third network device

S1001: Obtain time information of a paging moment at which the first network device pages a terminal device

S1002: Send a first message to the first network device based on the time information of the paging moment at which the first network device pages the terminal device

FIG. 14

FIG. 15

| Terminal device | First network device | Second network device | Third network device | Core network device |
|---|---|---|---|---|

S1201: Time information of a paging moment at which the first network device pages the terminal device and time information of a paging moment at which the second network device pages the terminal device

S1202: Downlink data or downlink signaling of the terminal device

S1203: Determine a paging moment time sequence based on the time information of the paging moment at which the first network device pages the terminal device and the time information of the paging moment at which the second network device pages the terminal device

S1204: Determine, based on capability information of the terminal device, a paging moment at which the third network device pages the terminal device

S1205: Page the terminal device at the paging moment at which the third network device pages the terminal device

S1206: Second message

FIG. 16

Core network device

| Processing module | Sending module | Receiving module |

13  11  12

FIG. 17

Core network device

| Receiving module | Processing module | Sending module |

23  21  22

FIG. 18

Third network device

| Sending module | Processing module | Receiving module |

31  32  33

FIG. 19

Third network device

| Receiving module | Processing module | Sending module |

43    41    42

FIG. 20

Network device

| Receiving module | Processing module | Sending module |

53    51    52

FIG. 21

Terminal device

| Receiving module | Processing module | Sending module |

63    61    62

FIG. 22

Communication
apparatus

Processor — 71    Power supply — 73

74

Memory — 72

Communication
port — 75

**FIG. 23**

Communication
apparatus

Processor — 81    Power supply — 85

86

Memory — 82

84    Transmitter    Receiver    Communication
port — 87

83

**FIG. 24**

## INTERNATIONAL SEARCH REPORT

| International application No. |
| --- |
| **PCT/CN2020/091583** |

**A.    CLASSIFICATION OF SUBJECT MATTER**

H04W 68/00(2009.01)i

According to International Patent Classification (IPC) or to both national classification and IPC

**B.    FIELDS SEARCHED**

Minimum documentation searched (classification system followed by classification symbols)

H04W,H04L,H04Q

Documentation searched other than minimum documentation to the extent that such documents are included in the fields searched

Electronic data base consulted during the international search (name of data base and, where practicable, search terms used)

CNPAT, WPI, EPODOC, 3GPP, GOOGLE: 寻呼, 偏移, 偏置, 不同, 时刻, 时间, 时机, 核心网, CN, 指示, 取消, paging, offset , shift , different, time, timing, occasion, opportunity, indicate, cancel

**C.    DOCUMENTS CONSIDERED TO BE RELEVANT**

| Category* | Citation of document, with indication, where appropriate, of the relevant passages | Relevant to claim No. |
| --- | --- | --- |
| X | NEC. "Paging for Rel-13 MTC"<br>*3GPP TSG-RAN WG3#88 R3-151003*, 29 May 2015 (2015-05-29),<br>    section 2.3 | 1-76 |
| A | QUALCOMM INC. "Report of Email Discussion [101bis#67] [NR] PO/PF calculation"<br>*3GPP TSG-RAN WG2 Meeting #102 R2-1806885*, 25 May 2018 (2018-05-25),<br>    entire document | 1-76 |
| A | CN 109219117 A (HUAWEI TECHNOLOGIES CO., LTD.) 15 January 2019 (2019-01-15)<br>    entire document | 1-76 |
| A | WO 2013017006 A1 (HUAWEI TECHNOLOGIES CO., LTD.) 07 February 2013<br>(2013-02-07)<br>    entire document | 1-76 |
| A | WO 2016183945 A1 (HUAWEI TECHNOLOGIES CO., LTD.) 24 November 2016<br>(2016-11-24)<br>    entire document | 1-76 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 July 2020** | **21 August 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

| INTERNATIONAL SEARCH REPORT Information on patent family members | | | International application No. PCT/CN2020/091583 | | | |
|---|---|---|---|---|---|---|
| Patent document cited in search report | | | Publication date (day/month/year) | Patent family member(s) | | Publication date (day/month/year) |
| CN | 109219117 | A | 15 January 2019 | EP 2938135 A1 | | 28 October 2015 |
| | | | | US 2015319734 A1 | | 05 November 2015 |
| | | | | WO 2014110771 A1 | | 24 July 2014 |
| | | | | CN 104247521 A | | 24 December 2014 |
| | | | | US 2020077360 A1 | | 05 March 2020 |
| WO | 2013017006 | A1 | 07 February 2013 | CN 102917444 A | | 06 February 2013 |
| WO | 2016183945 | A1 | 24 November 2016 | US 2018098297 A1 | | 05 April 2018 |
| | | | | JP 2018520566 A | | 26 July 2018 |
| | | | | CN 106416391 A | | 15 February 2017 |
| | | | | EP 3291616 A1 | | 07 March 2018 |
| | | | | BR 112017024778 A2 | | 11 September 2018 |
| | | | | KR 20180005242 A | | 15 January 2018 |

Form PCT/ISA/210 (patent family annex) (January 2015)

**EP 3 975 634 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910517025